# EUROPEAN PATENT SPECIFICATION

(11) **EP 2 498 592 B1**
(45) Date of publication and mention of the grant of the patent: **25.06.2014**
(21) Application number: 10807565.6
(22) Date of filing: 10.11.2010
(51) Int. Cl.: A01G 9/12

(54) **DEVICE FOR SUPPORT OF A PLANT, OBJECT OR SHEET MATERIAL**
VORRICHTUNG ZUR STÜTZUNG EINER PFLANZE, EINES OBJEKTS ODER BAHNFÖRMIGEN MATERIALS
PROCÉDÉ ET DISPOSITIF DE SOUTIEN D'UNE PLANTE, D'UN OBJET OU D'UN MATÉRIAU EN FEUILLE

(30) Priority: 13.11.2009 US 590750; 28.08.2010 US 870809; 19.02.2010 US 660054
(43) Date of publication of application: 19.09.2012
(73) Proprietor: Morgan, Wayne, Soquel, CA 95073 (US)
(72) Inventor: Morgan, Wayne, Soquel, CA 95073 (US)
(74) Representative: Bankes, Stephen Charles Digby
(86) International application number: PCT/US2010/002945
(87) International publication number: WO 2011/059488

(56) References cited:
- CH-A- 443 768
- DE-C1- 3 628 634
- DE-U1- 9 216 300
- FR-A1- 2 881 613
- GB-A- 458 514
- US-A- 3 004 366

## Description

### CO-PENDING US NONPROVISIONAL PATENT APPLICATIONS

The present patent application is a Continuation Application of the US Nonprovisional Patent Application Serial No. 12/590,750 titled **DEVICE FOR SUPPORTING A PLANT, FENCE OR OBJECT** filed on November 13, 2009 by inventor Wayne Morgan; the US Nonprovisional Patent Application Serial No. 12/660,054 titled **DEVICE AND METHOD FOR SUPPORTING SHEET MATERIAL** as filed on February 19, 2010; and the US Nonprovisional Patent Application Serial No. 12/870,809 titled **METHOD AND DEVICE FOR CONFIGURABLY SUPPORTING TRELLIS OR BARRIER MATERIAL** as filed on August 28, 2010.

The present patent application claims benefit of the priority date of November 13, 2009 of the co-pending US Nonprovisional Patent Application Serial No. 12/590,750; the priority date of February 19, 2010 of the co-pending US Nonprovisional Patent Application Serial No. 12/660,054; and the priority date of August 28, 2010 of the co-pending US Nonprovisional Patent Application Serial No. 12/870,809.

### FIELD OF THE INVENTION

The present invention relates to the field of supporting sheet material, netting, trellis material, plants, fences in whole or part, or objects by structures extending from and anchored below an exposed ground surface.

### BACKGROUND OF THE INVENTION

It is often desirable to provide support and protection to plants, fences and object that are located above the exposed surface of the Earth, such as soil, sand, or an agrarian or rural landscape. Deployable structures, such as frameworks, that support and maintain sheets of material for the purposes of protection and support of plants, trellising plants, or solar energy collection have a wide range of applications in agricultural, rural and public safety sectors.

In one exemplary area of need for support structures, free roaming herbivores routinely damage plants and agricultural properties in their quest to reach edible plants. In particular, wild deer annually wreak hundreds of millions of dollars in damage to landscaping and gardens by eating and trampling plants. Deer also consume significant amounts of agricultural products. It is not unusual for an adult male deer to eat over five pounds of food per day. This rate of consumption can result in serious economic degradation of the yield of an agricultural property. In addition, deer can severely and permanently damage prairies and wooded area and even cause an extinction of certain plant species within their grazing range.

SBI, a market research firm headquartered in Rockville, Maryland, estimated in their publication entitled *The U.S. Market for Fencing* that the year 2005 United States domestic fencing market was over three billion dollars. This estimate included products comprising metal, vinyl and wood fencing. *The U.S. Market for Fencing* further specified factors affecting the purchase of fences and fencing material for the purpose of plant protection from deer to include disposable income, the home remodeling market, and consumer interest in home improvement and home decor.

While the market for deer barriers and barrier material measures in the billions of dollars annually, the willingness and ability of many consumers to erect deer fences is closely related to the purchase price, ease of installation and durability of deer barrier products and components. The prior art fails to offer solutions that protect plants damage and areas from intrusion by deer while optimally reducing costs of materials acquisition and increasing ease of barrier installation.

In another area of need, it is sometimes desirable to deploy sun-shading materials and protective sheets that protect plants and seedlings from sun damage and/or from exposure to inclement weather conditions. Yet the prior art fails to provide support structures that optimally enable the positioning of sun-shading materials and protective sheets above plants and seedlings over a wide range of plant growth bed or site conditions.

In yet another area of need, solar energy collection fabrics and panels are becoming increasingly available at financially attractive price points for use by consumers in a wide variety of geography and ground conditions. Yet the prior art fails to provide support structures that optimally enable the support of solar energy collection devices over exposed earth or broken ground.

Trellis structures are used in the prior art to support the growth of a wide variety of plants. The positioning and long-term stability of deployed trellis netting is therefore a significant factor in such deployments. Protecting plants from damage by animals is an additional concern of many gardeners and agricultural ventures.

It is also of interest to many gardeners and agricultural workers to position trellis netting relative to the path of the sun, and to vary the positioning of the trellis netting over time. Yet the prior art fails to provide for portable, ground anchor systems that enable the positioning of trellis netting in a given location and allow adjustment of the trellis netting position after an initial deployment of the ground anchored system.

There is therefore a long-felt need to provide improved methods and devices for trellising plants, supporting and protecting plants and for reducing damage by animals to sheet materials, such as solar energy collection fabric or plant protection materials.

The prior art fails to provide solid elements that are driven into the ground to form both a linear supporting post section above the ground and an anchoring length that after insertion into the ground extends at an angle away from a longitudinal axis of the post section.

CH-443768 describes a support for potted plants according to the preamble of claim 1.

### SUMMARY OF THE INVENTION

The invention is defined in the appended claims. A support system includes an anchoring post and a support module. The support module may be or include one or more arms that support or helps to protect at least a portion of a plant or object. The anchoring post includes two or more elongate elements that are coupled together substantially in parallel along a longitudinal axis, i.e., an elongate axis. The anchoring post presents a post section and an anchor section, wherein each anchor section is configured to angle progressively away from the longitudinal axis as the anchoring post receives a force that drives the anchor section substantially into the ground. The post section may comprise a combination of a post end of each of the elongate elements and the anchor section may comprise a combination of an anchor end of each of the elongate elements, wherein each anchor end extends continuously from a same elongate element that additionally comprises a post end. One or more second elongate elements may include an anchor tine that is configured for insertion into a ground material.

In various alternate preferred embodiments of the present invention, the anchoring post may comprise three or more elongate elements. Each elongate element may present a striking point distal from the anchor sections, wherein a plurality of striking points are disposed substantially proximate to a striking plane that is normal to the longitudinal axis. The striking points may be partially or wholly enclosed by a collar that compresses, maintains, and/or supports the anchor sections in a substantially parallel orientation.

In various still alternate preferred embodiments of the present invention, the anchoring post may be or comprise metal, metal alloy, a solid metal material such as metallic rebar, and/or a suitably rigid but malleable material known in the art. The post sections may alternatively or additionally be welded to each other and/or to one or more metal collars.

According to a first aspect of the method not forming part of the present invention, the support module may include one or more flexible arms not forming part that are configured to alternately, optionally or additionally support one or more of the following: a. a netting; b. a protective plant cover; c. a tree trunk; d. a plant pot; e. a sign; f. a cistern and enclosed water; g. an animal barrier; h. a branch or other element of a plant extending above ground; and i. a fence.

A sheet material, such as a barrier material, a wire mesh, a plastic netting or a deer netting material, may be attached to the flexible arms and may extend for seven feet or more from a ground plane to a top height of flexible arms above the ground plane. A rod may be positioned at a bottom edge of the barrier material and positioned and coupled with the barrier material, e.g., interweaved within the lines of a netting of the barrier material, to weigh the barrier material toward the ground surface. An attachment tool, such as a garden staple, may be applied to hold the rods in position relative to the ground surface, whereby the barrier material is further secured to the ground surface.

The barrier material may optionally be a netting and/or be permeable to air and permit airflow through the barrier material. Certain barrier material, such as wire mesh, a plastic netting or a deer netting, may be coupled with the framework to form a trellis to support a plant or plants. The barrier material may further comprise a flexible linear element, such as a cord, that extends above the posts of the devices and holds a netting or other sheet of material above the device posts.

In yet another configuration, one or more appendages may extend up from the post to hold the linear support element in place. The barrier material may alternatively or additionally positioned above one or more fencing devices, wherein the flexible arms may extend upwards from the ground surface and be outfitted with support features that hold the barrier material up and away from one or more plants. The flexible support feature may be a Styrofoam (TM) ball or other suitable shaped support feature.

A trellis netting and/or a sheet material may be attached to distal ends of the flexible arms and may extend from a ground plane wherein the anchor section is positioned. An attachment tool, such as a garden staple, may be applied to hold the trellis netting or sheet material in position relative to the ground surface, whereby the trellis netting or sheet material is further secured to the ground surface. Additionally or alternatively, one or more flexible arms may be coupled with an element that extends into the ground surface and thereby stabilizes the coupled arm.

In one alternate preferred embodiment of the present invention, a trellis netting sheet may be coupled at a top edge to a first flexible arm, and also be coupled at a bottom edge to an alternate flexible arm. Both flexible arms may be positioned and repositioned relative to the sun or other light source or structure in order to optimize the growth or protection of a plant.

In another alternate preferred embodiment of the method, a separate trellis netting sheet may individually be attached to separate flexible arms, wherein each trellis netting sheet is separately coupled with a ground surface by a garden staple or hook device.

In another alternate preferred embodiment of the method, one or more flexible arms may be oriented horizontally or vertically to position a liner element, such as a string, that is made visible to discourage deer and other animals from jumping into an area of plant growth. In particular a plurality of devices may be positioned to mutually support a length of string wherein at least one flexible arm each device is positioned horizontally and away from a protected area, and the string is attached at a distal point of each arm. The string may have flags or other material attached to increase the visibility of the string to an animal.

One or more flexible arms may be or comprise metal, metal alloy, a solid metal material such as metallic rebar, and/or a suitably rigid but malleable material known in the art. One or more arms may be welded to each other, to one or more anchoring posts, and/or one or more metal collars.

According to a second aspect of the method, a plurality of support systems are installed to (a.) provide support or be comprised within a fence; (b.) provide support or protection to one or more plants; and/or (c.) at least partially protect or enclose an area.

According to a third aspect of the method optionally, alternatively or additionally, a coupling element, such as a flexible tube, may be applied to couple arms of a same support module and/or arms of neighboring support systems. The coupled arms of one or more support modules may be configured and positioned to support a plant, such as a tree, or support a fence or fence element, such as netting.

The foregoing and other objects, features and advantages will be apparent from the following description of aspects of the present invention as illustrated in the accompanying drawings.

### Brief Description of the Figures

These, and further features of various aspects of the present invention may be better understood with reference to the accompanying specification, wherein:
Figure 1 is an illustration of a first alternate preferred embodiment of the present invention, or first version, that includes two elongate elements;
Figure 2 is a close-up partial view of an elongate element of the first version of Figure 1;
Figure 3 is a close-up partial view of an alternate, hollowed elongate element of the first version of Figure 1;
Figure 4 is a perspective side view of a second alternate preferred embodiment of the present invention having three elongate elements;
Figure 5 is a perspective view of a third alternate preferred embodiment of the present invention having four elongate elements and four support arms;
Figure 6A is an illustration of the third version of Figure 5, wherein the elongate elements are packaged for shipment;
Figure 6B is an illustration of the third version of Figures 5 and Figure 6A in an unpackaged state and ready for installation;
Figure 6C illustrates the third version of Figures 5, 6A and 6B after an installation in a ground material by means of application of force by a hammer to the elongate elements;
Figure 7A is a close-up view of an anchor section of the third version of Figures 5 and 6A-6C positioned above the ground material of Figure 6C;
Figure 7B is a close-up view of the anchor section of the third version of Figures 5, 6A-6C and 7A partially inserted into the ground material of Figures 6C and 7A;
Figure 7C is a close-up view of the anchor section of the third version of Figures 5, 6A-6C and 7A-7B fully inserted into the ground material of Figures 6C and 7A-7B;
Figure 8 is an illustration of the second version of Figure 4 that includes three elongate elements, the collar, and two support arms positioned to constrain a tree trunk;
Figure 9 is an illustration of the second version of Figures 4 and 8 combined with a coupling element to constrain the tree trunk of Figure 8;
Figure 10 is a close-up partial view of the support arms of the second version of Figures 4, 8 and 9 and the coupling element of Figure 9;
Figure 11 is an illustration of the third version of Figure 5 positioned to support a plant pot and a flower pot;
Figure 12 is an illustration of the third version of Figures 5 and 11 having two support arms configured into a rectangular outline;
Figure 13 is an illustration of the third version of Figures 5, 11 and 12 further comprising a visual sign;
Figure 14 is an illustration of the third version of Figures 5 and 11-13 and positioned to support a vessel holding a liquid, e.g., a water bowl;
Figure 15 shows a fourth alternate preferred embodiment of the present invention wherein a plurality of second versions of Figures 4 are further comprised with a total of four support arms and are mechanically coupled together to form a fence in combination with a fence material;
Figure 16 is an illustration of a fifth alternate preferred embodiment of the present invention, or fourth version, wherein a plurality of support arms initially extend upwards from a collar;
Figure 17 is an illustration of the fifth version of Figure 16 as installed into a ground material;
Figure 18 is an illustration of the fifth version of Figure 16 in a first deployed state;
Figure 19 is an illustration of the fifth version of Figure 16 in a second deployed state;
Figure 20 is an illustration of the fifth version of Figure 16 located proximate to a plurality of plants and supporting a netting;
Figure 21 is an illustration of the fifth version of Figure 16 supporting the netting of Figure 20 and enclosing a leaf-bearing plant;
Figure 22 is an illustration of a plurality of second versions of Figure 4, holding a barrier material of Figure 15 in place;
Figure 23 is an illustration of the plurality of second versions of Figure 22, wherein staples are deployed along the ground side of the barrier material of Figure 15;
Figure 24 is an illustration of the plurality of second versions of Figure 4 holding the barrier material of Figure 15 in place, wherein the barrier material includes a vertical slit;
Figure 25 is an illustration of the plurality of second versions of Figure 4 holding the barrier material of Figure 24, wherein a vertical slit is maintained in an open position;
Figure 26 is an illustration of the plurality of second versions of Figure 4 holding the barrier material of Figures 24 and 25, wherein an axis of movement X is presented;
Figure 27 is a top view of a plurality of second versions of Figure 4, wherein the fencing devices are positioned and coupled to surround a tree;
Figure 28 is a side view of a plurality of second versions of Figure 4 configured to support the barrier material of Figure 15 to encircle around and provide cover over a plurality of trees, or other plants or seedlings;
Figure 29 is a side view of the tubular coupling element of Figure 15;
Figure 30 is a perspective view of the tubular coupling element of Figure 15;
Figure 31 is a top view of a plurality of second versions of Figure 4, wherein the second versions are positioned and coupled to both encircle the tree of Figure 8 and to provide top cover over the tree;
Figure 32 is a top view of a plurality of second versions of Figure 4, wherein the second versions are positioned and coupled to both encircle a plurality of trees of Figure 8 and a plurality of plants of Figure 21 and to provide top cover over the plurality of trees and plants;
Figure 33 is a side view of an alternate configuration of tubular coupling element of Figure 15;;
Figure 34 is a perspective view of an alternate configuration of the second version of Figure 4 and barrier material of Figure 15;
Figure 35 is a side perspective view of the coupling element of Figure 15;
Figure 36 is a top view of a plurality of fencing devices of second versions of Figure 4, wherein the second versions are positioned and coupled to both encircle a plurality of plants of Figure 21 in combination with a wall and to also provide top cover over the plurality of plants;
Figure 37 is a perspective side view of the second version of Figure 4, wherein the flexible arms of the second version are positioned to orient the barrier material of Figure 15 in a horizontal position to support elements of a tomato plant;
Figure 38 is a cut-away side view of the second version of Figure 4, wherein the flexible arms of the second version are positioned to orient the barrier material of Figure 15 in a vertical orientation to support elements of a vine;
Figure 39 is a front view of the second version of Figure 4, wherein the flexible arms of the second version are positioned to orient the barrier material of Figure 15 in a vertical orientation and coupled to rods of Figure 22 to provide additional tension to the barrier material;
Figure 40 is a perspective side view of the second version of Figure 4, wherein the flexible arms are positioned to orient a shading material in a horizontal position to protect plants from the sun or exposure to inclement weather;
Figure 41 is a perspective side view of the second version of Figure 4, wherein the flexible arms of the second version are positioned to orient a solar energy collection panel or other material in a horizontal position and facing the sun;
Figure 42 is an illustration of the plurality of the second versions of Figure 4, holding the barrier material of Figure 15 in place, wherein the rods of Figure 22 are coupled with flexible arms of the second versions and a support line is added to provide support to the barrier material;
Figure 43 is a perspective side view two third versions of Figure 5 configured as two substantially identical trellis devices wherein a first trellis device is shown in a shipping configuration and a second trellis device is shown in a deployed configuration;
Figure 44 is a perspective side view of the two substantially identical trellis devices of Figure 43 wherein the first trellis device is coupled with the second trellis device;
Figure 45 shows the second version of Figure 4 anchored in the ground element and having two pairs of arms separately configured to each support a separate length of trellis netting;
Figure 46 shows the second version of Figure 4 anchored in the ground element and having two pairs of arms separately configured to each support a separate length of trellis netting in a wider configuration than as shown in Figure 45;
Figure 47 shows the second version of Figure 4 anchored in the configuration of Figure 45 and additionally having ground coupling hooked elements attached to the two lower positioned arms of the second version;
Figure 48 shows the second version of Figure 4 anchored in the ground element and having only two arms deployed horizontally wherein each arm supports a separate length of trellis netting and each length of trellis netting is coupled to the ground with secondary hooked elements;
Figure 49 shows the second version of Figure 4 anchored in the ground element and having all four arms deployed horizontally wherein each arm supports a separate length of trellis netting and each length of trellis netting is coupled to the ground with secondary hooked elements;
Figure 50 is a top view of a variation of the second version of Figure 4 wherein the second version of comprises only three flexible support arms;
Figure 51A is a side view of the second version of Figure 4 wherein one flexible arm is extended vertically and another vertical arm is extended horizontally, whereby each of these two arms deters animal intrusion; and
Figure 51B is a perspective view of the second version of Figure 4 in the orientation of Figure 8A and wherein two arms are each supporting a string bearing flags.

### DETAILED DESCRIPTION

It is to be understood that this invention is not limited to particular aspects of the present invention described, as such may, of course, vary. It is also to be understood that the terminology used herein is for the purpose of describing particular aspects only, and is not intended to be limiting, since the scope of the present invention will be limited only by the appended claims.

Methods recited herein may be carried out in any order of the recited events which is logically possible, as well as the recited order of events.

Where a range of values is provided herein, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, the methods and materials are now described.

It must be noted that as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

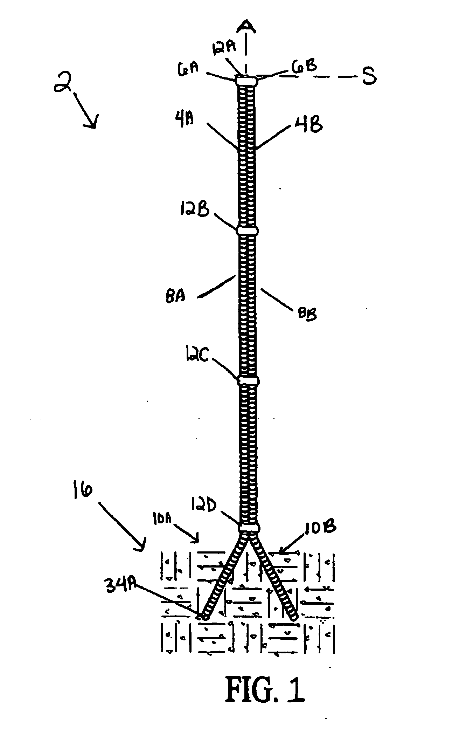

Referring now to Figure 1, Figure 1 is a side view of a first alternate preferred embodiment of the present invention 2, or first version 2, that includes a first elongate element 4A and a second elongate element 4B. Each elongate element 4A & 4B includes a striking end 6A & 6B, an elongate length 8A & 8B, and an anchor end 10A & 10B. One or more of the elongate elements 4A & 4B may be formed by a continuous solid material or a fully or partially hollowed tube. The first version 2 may includes at least two elongate elements 4A & 4B.

The elongate elements 4A & 4B are coupled together at one or more coupling points 12A, 12B, 12C and 12D and held substantially in parallel with an elongate axis A, i.e., wherein each elongate element 4A & 4B is preferably within five degrees of planarity with the elongate axis A along the longest dimension of the respective elongate element 4A & 4B. The coupling points 12A, 12B, 12C and 12D may be or comprise single or combined welds and/or a pressure fitting. Each anchor end 10A & 10B includes a tine 34A & 34B that extends from an anchor coupling point 12D.

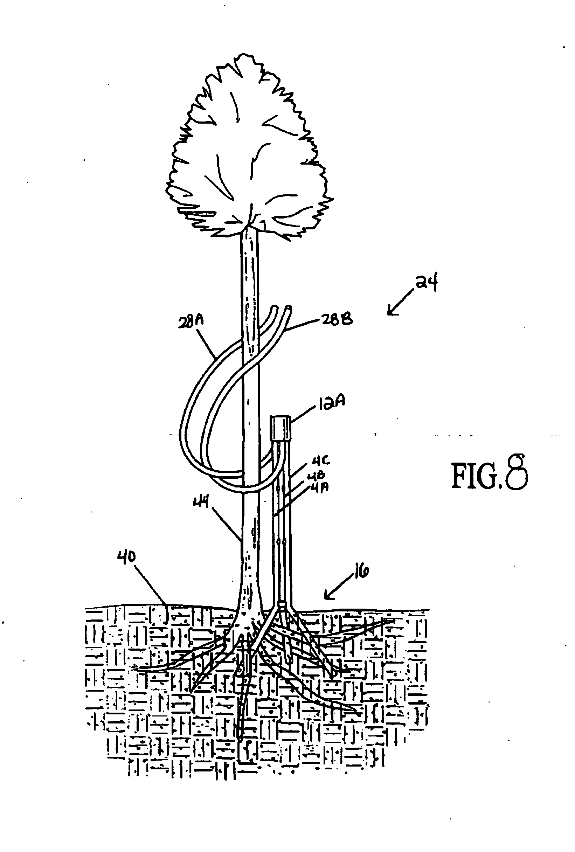

A support module 14 configured may be attached to the elongate elements 12A & 12B as depicted in Figures 8 through 21 herein.

The anchor ends 10A & 10B of the elongate elements 4A & 4B in combination form an anchor section 16 of the first version 2. The striking ends 6A & 6B and the elongate lengths 8A and 8B of the elongate elements 4A & 4B and in combination form a post section 18 of the first version 2.

Each striking end 6A & 6B further comprises a striking point 20A & 20B that are each located within a same striking plane S.

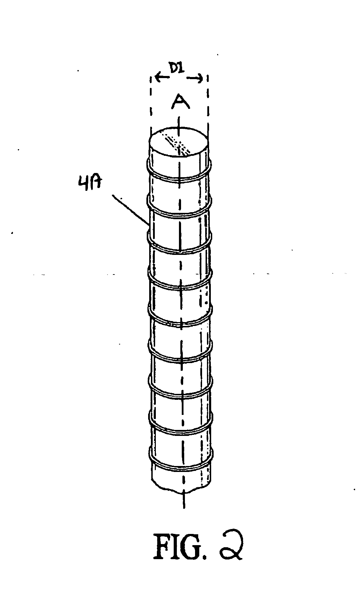

Referring now to Figure 2, Figure 2 is a close-up partial view of an elongate element 4A & 4B. It is understood that certain alternate preferred embodiments of one or more elongate elements 4A & 4B may be or comprise a length of number three U.S. imperial bar size rebar having a nominal diameter D1 of 0.375 inch. Alternatively or additionally, one or more elongate elements 4A & 4B may be or comprise metal, a metal alloy, a solid metal material such as steel or aluminum, and/or a suitably rigid but malleable nonmetallic material known in the art.

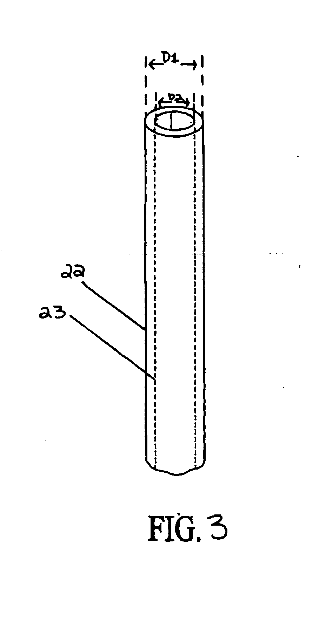

Referring now to Figure 3, Figure 3 is a close-up partial view of an alternate elongate element 22, wherein the alternate elongate element 22 is at least partially hollowed and a lumen 24 of the alternate second element 22 has a diameter D2 preferably in the range of 0.90 to 0.20 of a total diameter D1 of the alternate elongate element 22.

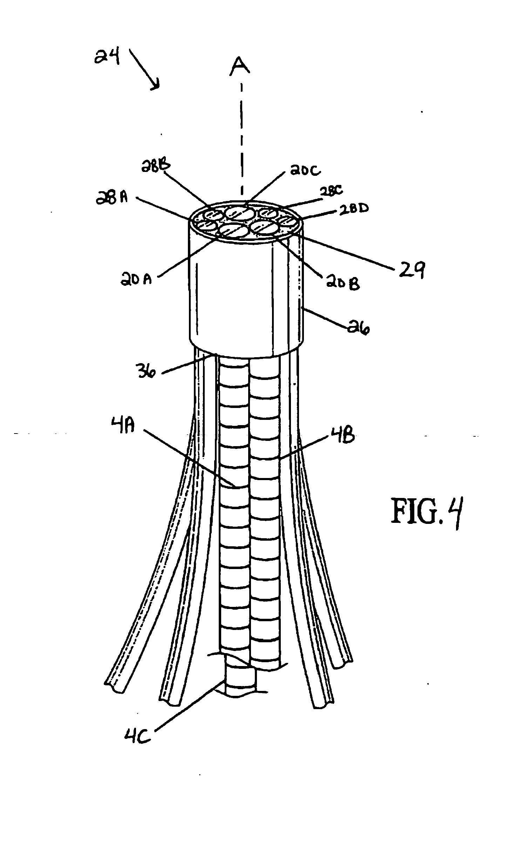

Referring now to Figure 4, Figure 4 is a close-up partial view of a second alternate preferred embodiment of the present invention 24, or second version 24, configured with three elongate elements 4A, 4B & 4C, a collar 26 and four support arms 28A, 28B, 28C & 28D.

One or more of the support arms 28A, 28B, 28C & 28D may be or comprise an organic plastic material, a nonorganic plastic material, a metal such as aluminum, steel or iron, and/or a metal alloy. In one exemplary preferred embodiment of the present invention, one or more of the support arms 28A-28D may comprise a length of rebar, steel, aluminum or iron having a nominal diameter of 0.250 inch.

The collar 26 may be a press fitting that holds the support arms 28A, 28B, 28C & 28D and the elongate elements 4A, 4B & 4C under compression. Alternately or additionally the collar 26, the support arms 28A, 28B, 28C & 28D and/or the elongate elements 4A, 4B & 4C may be welded together. An optional weld material 29 may be provided to support a welding of the collar 26, the support arms 28A, 28B, 28C & 28D and/or the elongate elements 4A, 4B & 4C. The weld material 29 may alternatively be derived from the process of applying a welding heat to the collar 26, the support arms 28A, 28B, 28C & 28D and/or the elongate elements 4A, 4B & 4C. The collar 26 may comprise steel, stainless steel, aluminum, iron, a metal, a metal alloy, or other suitable plastic, organic or inorganic material or structure known in the art. The collar 26 of the second version preferably presents a width dimension in parallel with the elongate axis in the range of 0.25 inches to six inches.

The elongate elements 4A, 4B & 4C are coupled together at one or more coupling points 12A, 12B, 12C and 12D and held substantially in parallel with an elongate axis A, i.e., wherein each elongate element 4A, 4B & 4C is preferably within five degrees of planarity with the elongate axis A along the longest dimension of the respective elongate element 4A, 4B & 4C.

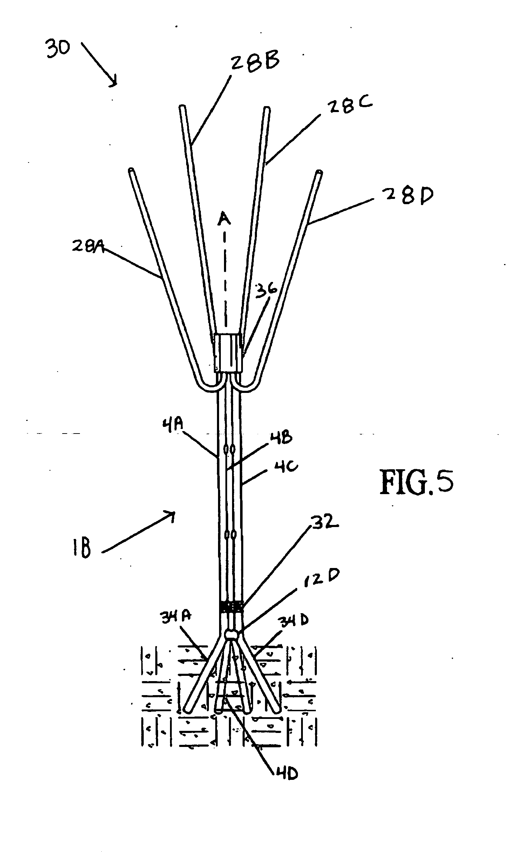

Referring now to Figure 5, Figure 5 is a perspective view of a third alternate preferred embodiment of the present invention 30, or third version 30, a depth registration marking 32, having four elongate elements 4A, 4B, 4C & 4D and four support arms 28A, 28B, 28C & 28D. The post section 18 of the third version 30 is formed by the combination of the portion elongate elements 4A, 4B, 4C & 4D that extend from each elongate element striking point 20A-20D to the fourth coupling point 12D.

The depth registration marking 32 is a visual indicator of the position of the post section 18 relative to the ground material 40 whereby a user may visually calibrate the length of the third version 30 that is protruding from the ground material 40 as the anchor section 16 is inserted into the ground material 40. This visual calibration by the user supported by the depth registration marking 32 helps the user to set the anchor section 16 of a single third version 30 at a preferred depth into the ground material 40, and to position a plurality of third versions 30 at approximately a same depth within the ground material 40.

The anchor section 16 of the third version is formed by the fourth coupling point 12D and a plurality of tines 34A-34D of the anchor ends 10A-10D

The exemplary elongate elements 4A, 4B, 4C & 4D may each comprise an individual steel reinforcing bar, known as a rebar in the art, wherein each rebar preferably presents a length in the range from 0.5 foot to twelve feet and a cross-sectional diameter preferably in the range of from 0.25 inch to 2.0 inches. Each exemplary elongate element 4A, 4B, 4C & 4D preferably presents an individual length in the range from 1.0 foot to four feet and an individual cross-sectional diameter preferably in the range of from 0.25 inch to 0.75 inch. The exemplary elongate elements 4A, 4B, 4C & 4D most preferably have equal lengths along the elongate axis A. It is understood that certain alternate preferred embodiments of one or more first elongate elements 4A, 4B, 4C & 4D may comprise a length of number three U.S. imperial bar size rebar having a nominal diameter of 0.375 inch. It is further understood that certain alternate preferred embodiments of one or more elongate elements 4A, 4B, 4C & 4D may comprise a length of metric size number ten rebar having a nominal diameter of 9.525 millimeters. The elongate elements 4A, 4B, 4C & 4D each preferably exhibit a yield strength preferably in the range starting from 250 Newtons per square millimeter of area and extending to 500 Newtons per square millimeter of area. Alternatively or additionally, one or more first elongate elements 4A, 4B, 4C & 4D may comprise a continuous length of (a.) American Society for Testing and Materials (hereinafter, "ASTM") A 615 Deformed and plain carbon-steel bars; (b.) ASTM A 706 Low-alloy steel deformed and plain bars; (c.) ASTM A 955 Deformed and plain stainless-steel bars; and/or (d.) ASTM A 996 Rail-steel and axle-steel deformed bars.

Alternatively or additionally, one or more elongate elements 4A, 4B, 4C & 4D may be or comprise metal, a metal alloy, a solid metal material such as steel or aluminum, and/or a suitably rigid but malleable nonmetallic material known in the art. In certain still alternate embodiments of the present invention, one or more elongate elements 4A & 4B may be shaped as a hollow tube, or alternatively partially hollowed in some fraction of total length.

One or more of the support arms 28A-28D may be or comprise an organic plastic material, a non-organic plastic material, a metal such as aluminum, steel or iron, and/or a metal alloy. In one exemplary preferred embodiment of the present invention, one or more of the support arms 28A-28D may comprise a length of steel, aluminum or iron having a nominal diameter of 0.250 inch.

Each support arm 28A-28D preferably presents a length no longer than any of the elongate elements 4A-4D. Each arm 28A-28D more preferably presents a length no longer than any of the post sections 14A-14D of the elongate elements 4A & 4B.

The plurality of support arms 28A-28D and the plurality of elongate elements 4A, 4B, 4C & 4D are coupled together by or within the collar 26 by welding and/or by a press fitting 36 formed by the collar 26 as shown in Figure 4.

The elongate elements 4A, 4B, 4C & 4D are coupled together at one or more coupling points 12A, 12B, 12C and 12D and held substantially in parallel with the elongate axis A, i.e., wherein each elongate element 4A, 4B, 4C & 4D is preferably within five degrees of planarity with the elongate axis A along the longest dimension of the respective elongate element 4A, 4B, 4C & 4D.

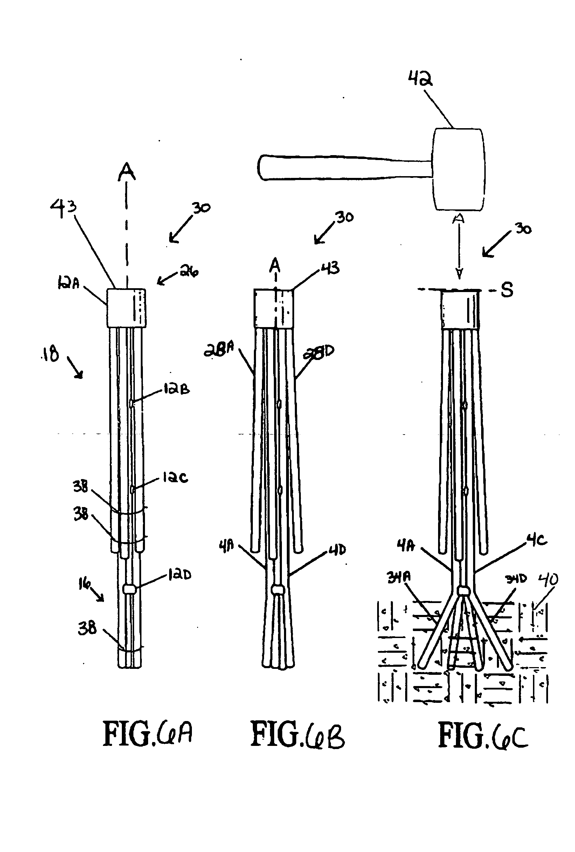

One or more bindings 38 are shown in Figure 6A that apply compressive force to maintain the first version 2 in a shipping position, or first state of the anchor section 16.. The bindings 38 may be metal wire, plastic or other suitable means known in the art.

Referring now to Figure 6B, Figure 6B presents the first version 2 with the bindings 38 removed and a plurality of anchor tines 34A-34D that are optionally preformed to angle away from the elongate axis A in a second state of the anchor section 16.

A user may manually, or optionally with the aid of a manual or powered tool, adjust the angle of the tines 34A-34D relative to the elongate axis A after the bindings 38 have been removed from the anchor section 16. This user adjustment of the tine orientation in the second state enables the user to compensate for an observed or expected conditions of the ground material 40 and with the purpose of inserted the anchor section 16 into a more preferred orientation within the ground material 40.

Referring now to Figures 6C, 7C and 8A, the third version 30 is shown fully installed into a ground material 40 in a third state of the anchor section wherein each anchor tine 34A-34D is further splayed away from the elongate axis A as a consequence of having receiving a force delivered by a hammer 44 at a plurality of striking points 26A-26D of the first elongate elements 4A, 4B, 4C & 4D. The striking points 20A-20D of each elongate element 4A-4D are located within the striking plane S.

A top collar edge 43 may be positioned in various alternated embodiments of the third version 30 to lie (a.) below the striking plane S; (b.) within the striking plane S; or (c.) above the striking plane S. It is preferable in certain other alternate preferred embodiments of the present invention that the striking points 20A-20D are positioned within the striking plane S and the top collar edge 43 is located below the striking plane S by a displacement in the range of from 0.125 inch to 0.250 inch, whereby the hammer 42 may deliver force directly to the plurality of first elongate elements 4A, 4B, 4C & 4D by direct physical contact with the striking points 20A-20D.

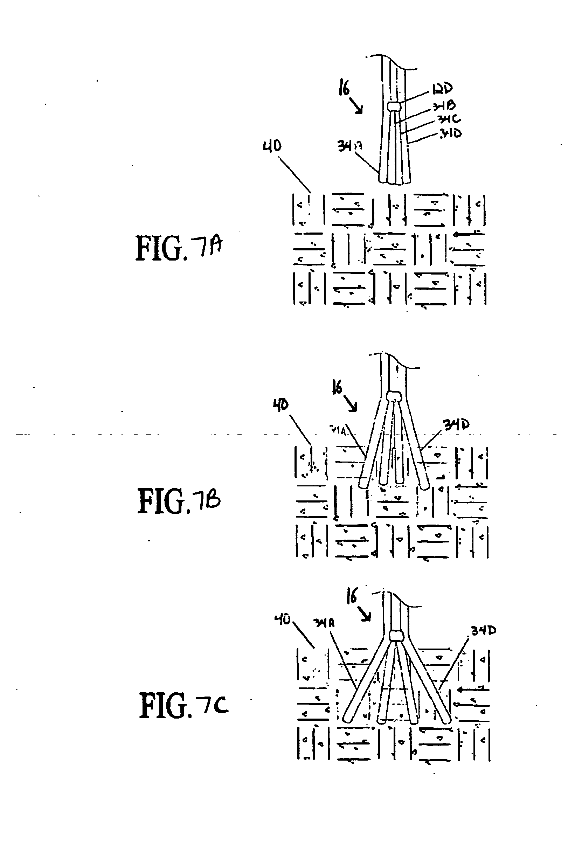

Referring now to Figure 7A, Figure 7A is a close-up view of an anchor section 16 of the third version 30 positioned above the ground material 40. The ground material 40 may be or comprise a supporting material such as soil, earth, sand, artificial ground covering, and/or exposed Earth surface.

Figure 7B is a close-up view of the anchor section 16 of the third version 30 partially inserted into the ground material 40 as a consequence of a downward force being delivered to the striking points 20A-20D. The plurality of anchor tines 34A-34D of the anchor section 16 are splayed further away from the elongate axis A as the anchor section 16 is driven further into the ground material 22. More particularly, each anchor end 10A-10D comprising one individual anchor tine 34A-34D may splay further from the elongate axis A as the anchor section 16 is forced into the supporting ground material 40.

Figure 7C is a close-up view of the anchor section 16 of the third version 30 fully inserted into the ground material 40, wherein the plurality of anchor tines 34A-34D are further splayed away from the elongate axis A.

The placement of the anchor tines 34A-34D in the splayed position of Figure 7C provides the post section 18 with a superior stability of the anchor tines 34A-34D that is achieved by the spreading process represented in Figures 6A-6C and Figures 7A-7C. This transition of the anchor tines 34A-34D from the second state of the anchor section 16 shown in Figures 6B and 7A to the third state of the anchor section 16 shown in Figures 6C and 7C produces an advantageous form of anchoring. The splaying of the anchor tines 20A-20D from the elongate axis A enables the present invention and the second version 24 and then third version 30 particularly, to be more securely wedged into the ground material 40.

The advantageous third state of the anchor section 16 is also a result of the tines 34A-34D deflecting off of obstructions located within the ground material, e.g., rocks and tree roots. In contrast, rigid prior art anchoring systems typically do not allow anchoring components thereof to conform or to deflect around or off of ground material obstructions. These more rigid prior art systems therefore limit the flexibility of positioning of an anchoring post within certain ground materials 40, whereas the method of the present invention provides an anchor section 16 that supports positioning of the attached post section 18 at a desirable or acceptable orientation in a wider variety of ground materials 40.

The third state of the anchor section 16 of Figures 6C and 7C presents a placement of the tines 34A-34D in the ground material 40 that is better able to resist wind flow from multiple directions, and more stably support unbalanced loading and offset loading caused by the weight of, and forces delivered from, the support arms 20A-20D.

In addition, as a user repositions the support arms 28A-28D of the support module, the user will typically delivers a force component that will act to pull the anchor section 16 up and out of the ground material 40 and/or deliver torque forces to the tines 34A-34D. The third state of the anchor section 16 enables the third version 30 to better resist these forces of uplift and torque as instantiated when a user prepares the support arms 28A-28D for plant or structure protection application after the anchor section 16 has been inserted into the ground material 40.

It is understood that each anchor tine 34A-34D is preferably formed from a continuous material that in total length forms an individual first elongate element 4A, 4B, 4C Figure 8 illustrates the second version 24, that includes three elongate elements 4A, 4B, & 4C, the collar 26, and two support arms 28A & 28B. The support arms 28A & 28B initially extend from the collar 26 and may be positioned to support a variety of plants and structures, such as a trunk 44 of a tree 46 as pictured in Figure 8. The support arms 128A & 28B may be positioned to constrain motion of the tree trunk 44.

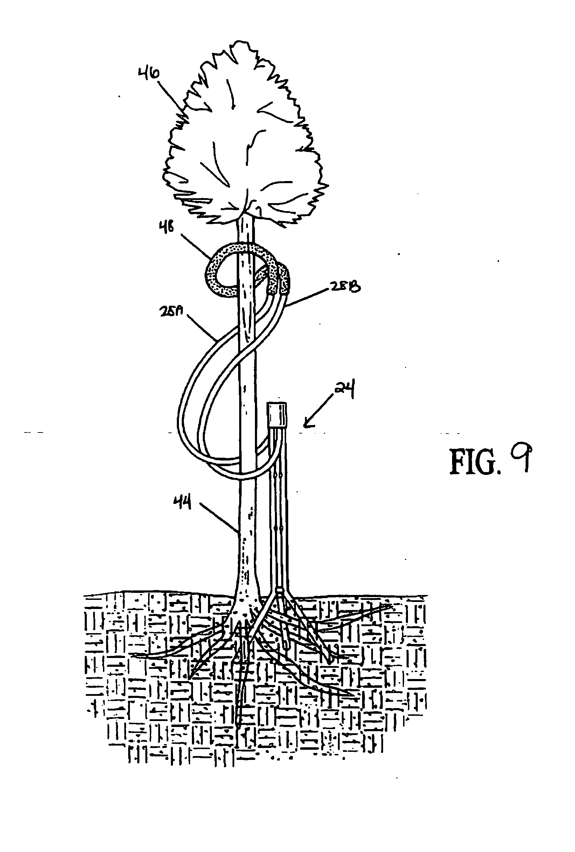

Figure 9 illustrates the second version 24 additionally including an optional coupling element 48 used to mechanically couple the two support arms 28A & 28B and to more stably constrain motion of the tree 46.

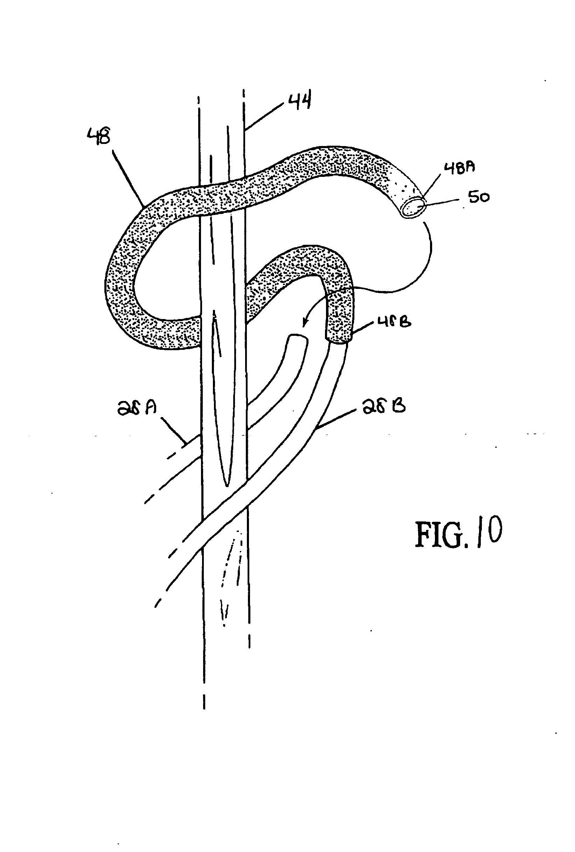

Figure 10 illustrates the coupling element 48, wherein the coupling element 48 may comprising a hollow flexible rubber or plastic tube with two hollowed ends 48A & 48B, wherein each hollowed end 48A & 48B is sized to enable a friction fit with a support arm 28A & 28B. Each coupling element end 48A & 48B presents a coupling aperture 50 sized to enable an interference fit with a support arm 28A & 28B by insertion of the support arm 28A & 28B into the coupling aperture 50.

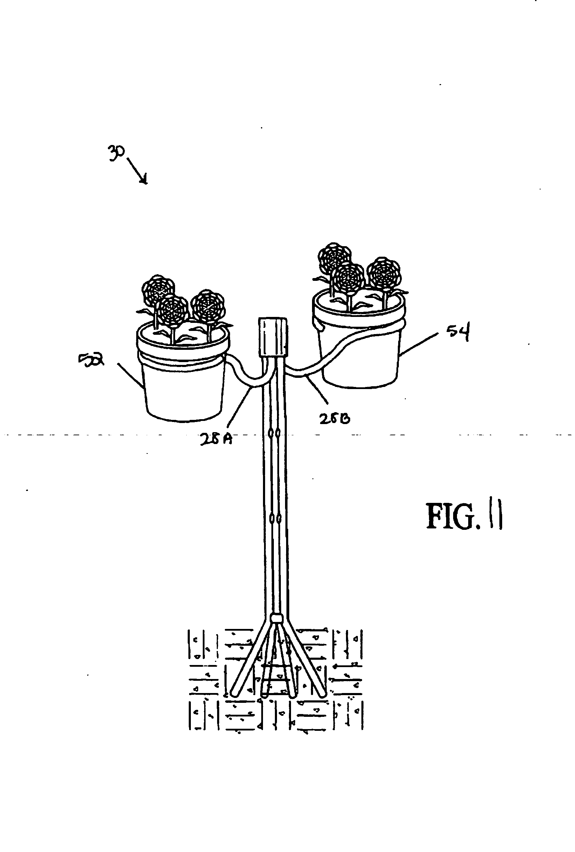

Figure 11 illustrates an alternate configuration of the second version 24, wherein one or more support arms 28A & 28B are positioned to substantially or partially enclose, and support, a container, such as a plant pot 52 or a flower pot 54. An additional optional plurality of press fit coupling features 56A-56D more proximate to the anchor tines 34A-34D than the collar 26 are presented in Figure 11, wherein the optional additional plurality of press fit coupling features 56A-56D support a rigidity of the post section 18 of the second version 24 by combined alignment in parallel with the elongate axis A of each of the elongate elements 4A-4D.

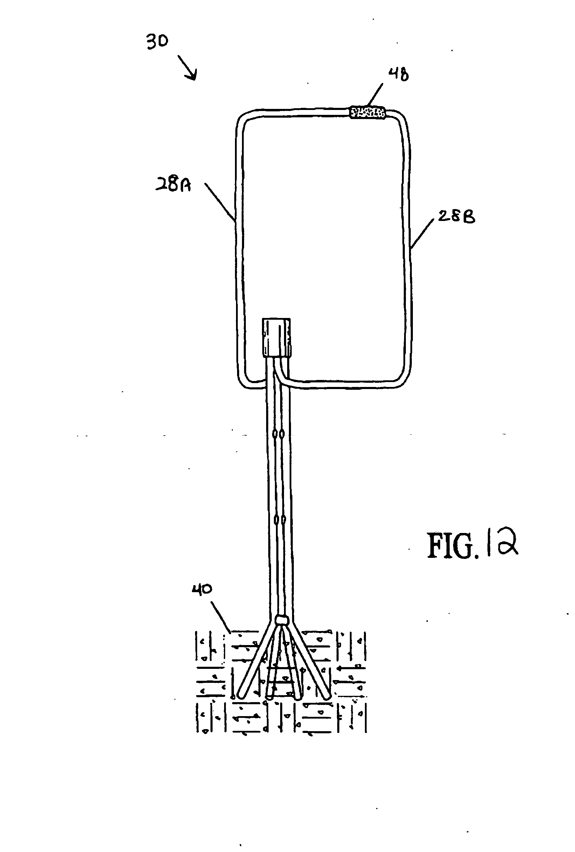

Figure 12 illustrates a still alternate configuration of the second version 24, wherein two support arms 28A & 28B are positioned to form a rectangular border shape. The optional coupling element 48 additionally may be applied to stabilize the two support arms 28A & 28B in the rectangular border shape.

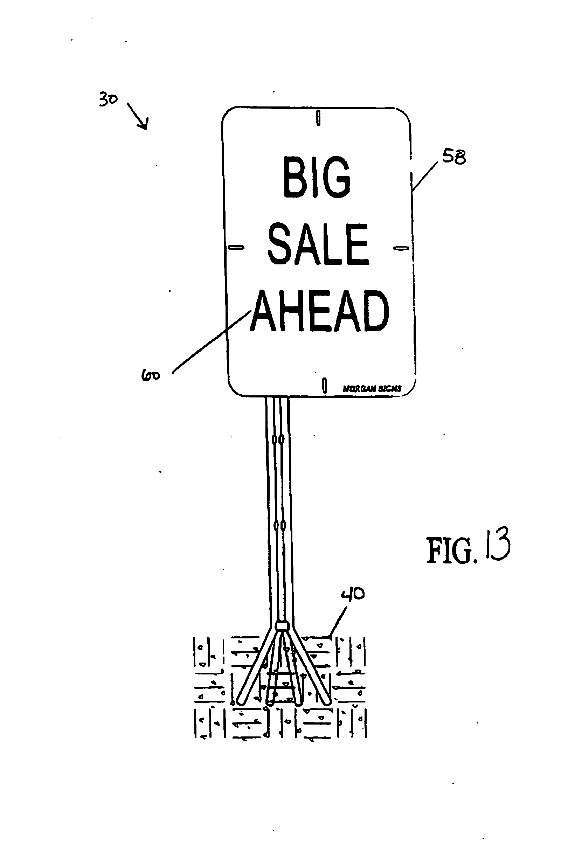

Figure 13 illustrates the alternate configuration of the second version 24, wherein a sign material 58 bearing a visual signage 60 is installed upon the support arms 28A & 28B.

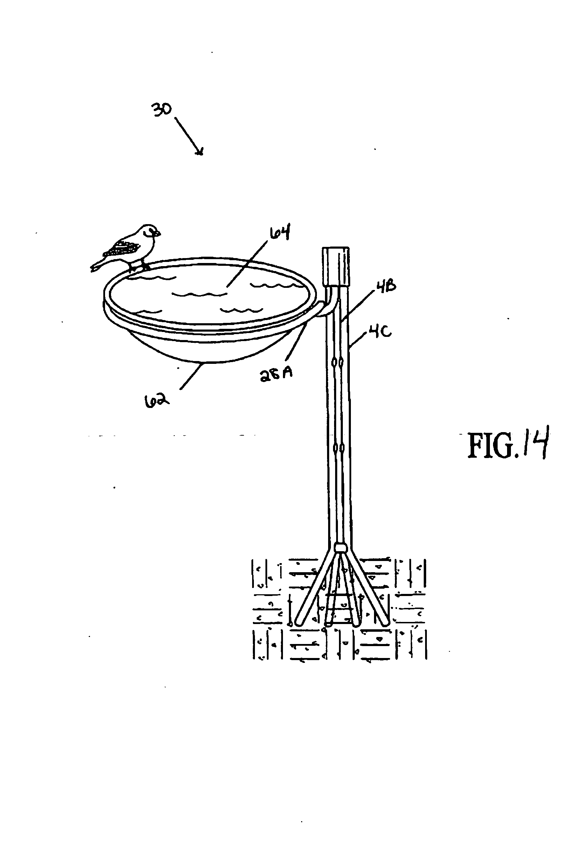

Figure 14 presents a yet alternate configuration of the second version 24 wherein the support arms 28A & 28B are positioned to support a vessel 62 shaped to contain water 64.

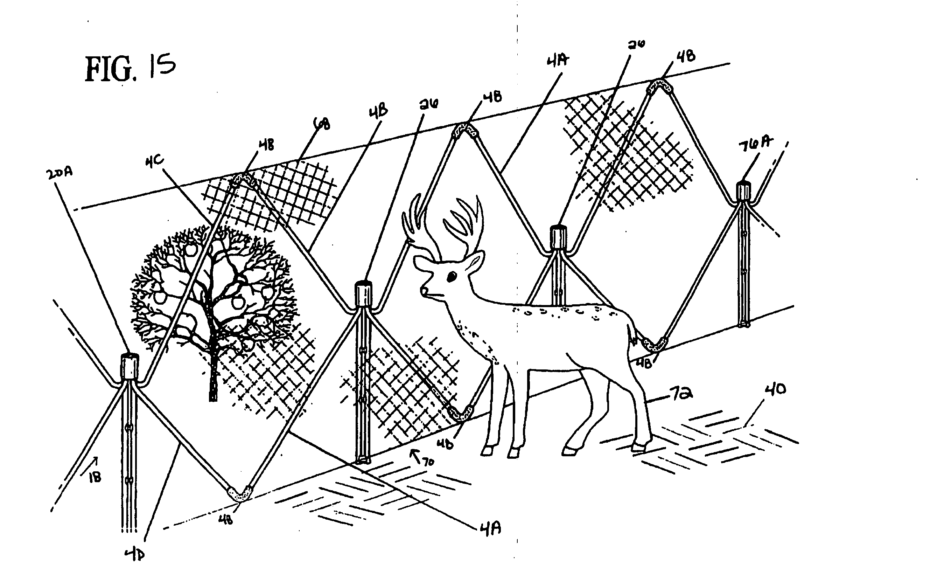

Figure 15 shows a fourth alternate preferred embodiment of the present invention 66, or fourth version 66, that comprises at least two second versions 24 mechanically coupled together to form a fence 68 in combination with a barrier material 70. A plurality of second versions 24 may be positioned to protect a tree 46, one or more plants, or an area or structure, from intrusion by human, deer 72, and/or other animals. The barrier material 70 may be or comprise the netting 80, such as a sheet of Ross Deer Netting (TM) deer netting material or a sheet of Wild Life Netting (TM).

When the fourth version 66 is intended to encircle protect the tree 46 from the deer 72, it is preferable that each support arm 28A-28D have a length in the range from three feet to six feet and that each post section 18 of the second version 24 be at least as long as the longest support arm 28A-28D. It is additionally preferable in certain additional alternate preferred embodiments of the method of the present invention that the second version 24 comprise support arms 28A-28D that are all substantially equal in length within plus or minus 0.5 inches.

Two of the support arms 28A & 28B of the second 24 are positionable downwards from the collar 26 toward the ground material 40. The two other support arms 28C & 28D of the same second version 24 are positionable upwards and away from the collar 26. A plurality of second versions 24 may be located proximate to each other and may be coupled by one or more coupling elements 48, wherein a downward angled support arm 28A of a first exemplary second version 24 is coupled to a downward angled support arm 28B of a neighboring second version 24, and an upward angled support arm 28C of the first exemplary second version 24 is coupled to an upward angled support arm 28D of the same neighboring second version 24.

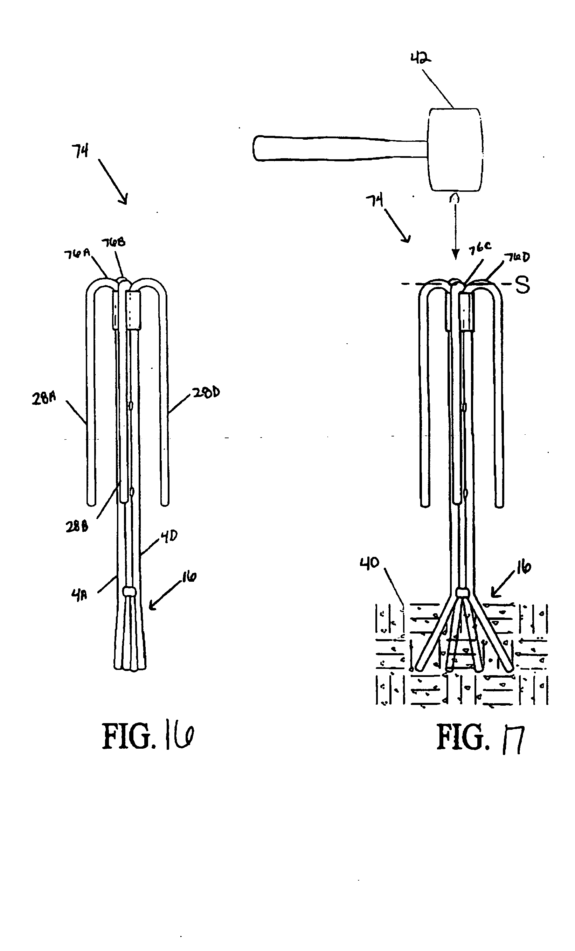

Referring now to Figures 16 & 17, Figure 16 is an illustration of a fifth alternate preferred embodiment of the present invention 74, or fifth version 74, wherein the plurality of support arms 28A-28D are extend upwards from the collar 26. Figure 17 illustrates a plurality of additional striking points 76A-76B of the fifth version 74 are available to receive a downward force directly from the hammer 42.

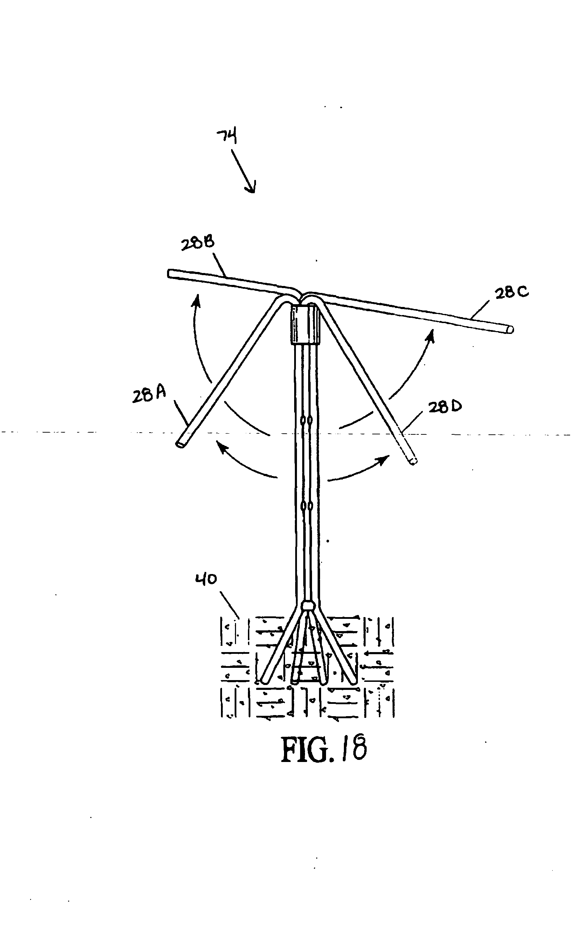

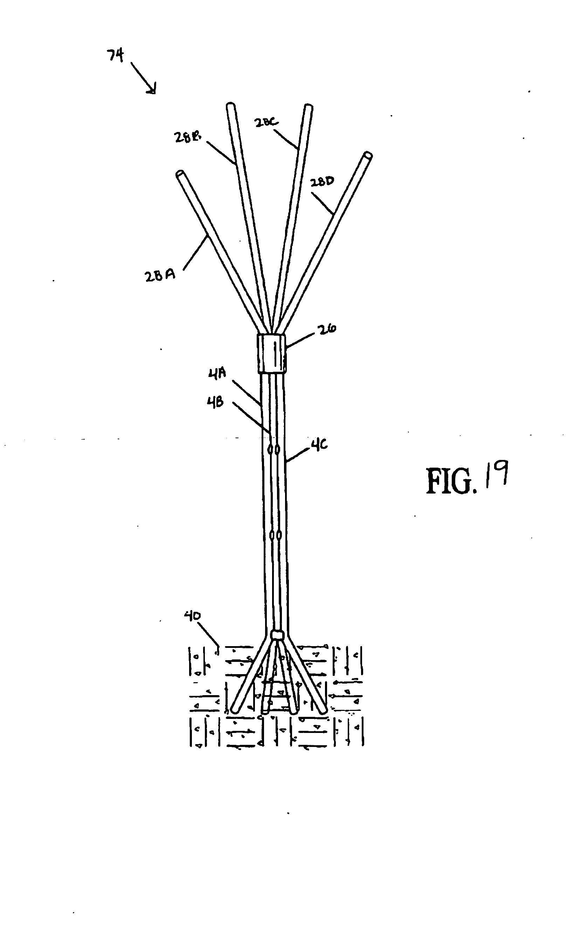

Referring now to Figures 18 and 19, Figure 18 partly illustrates the positionable mobility of the support arms 28A-28D. Figure 19 illustrates the support arms 28A-28D of the fifth version 74 angled upwards and away from the collar 26.

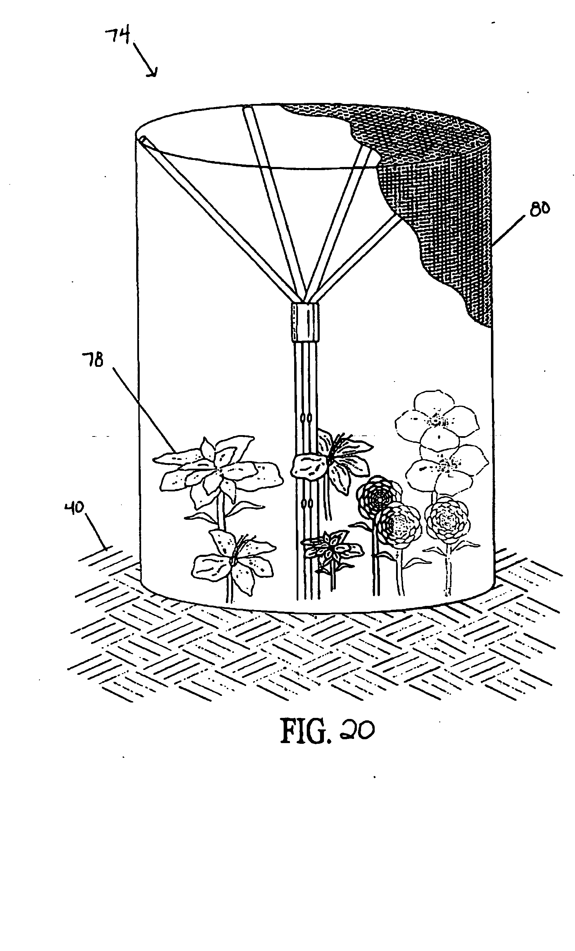

Figure 20 illustrates the fifth version 74 located proximate to a plurality of plants 78 and supporting a netting 80, wherein the netting 80 substantially encloses the plurality of plants 78, e.g., flowering plants, seedlings and shoots. It is understood that the netting 80 may be positioned to extend to, and make contact with, the ground material 40.

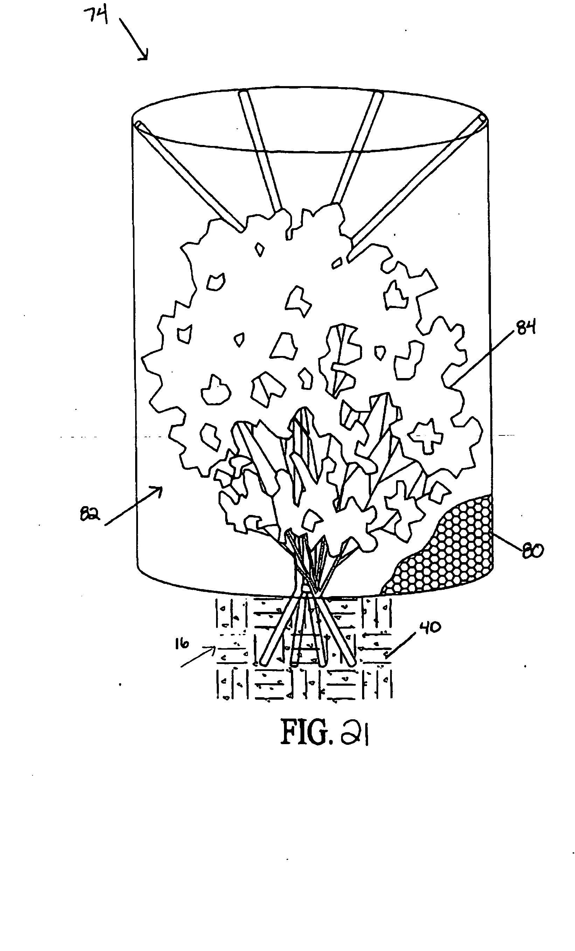

Figure 21 illustrates the fifth located proximate to a leaf-bearing plant 82 and supporting the netting 80, wherein the netting 80 substantially encloses a leafed region 84 of the leaf-bearing plant 82.

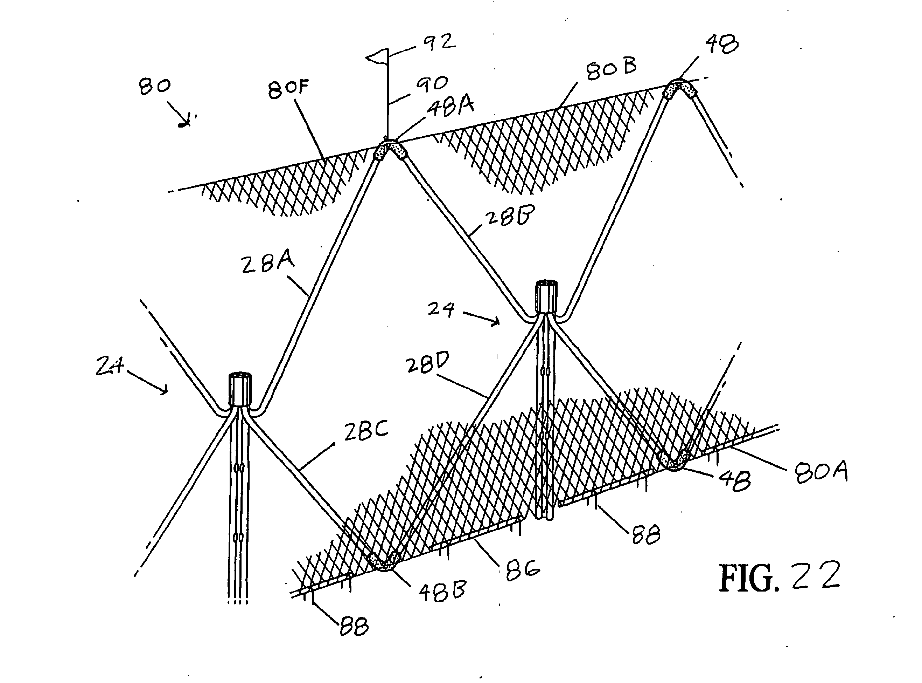

Referring now to Figure 22 Figure 22 illustrates a partial view of a plurality of second versions 24 that are coupled together by coupling elements 48. One or more flexible arms 28A-28D may reconfigurable to extend away from the collar 26 of the post section 18 within a range from zero degrees to 180 degrees from the elongate axis A. Each arm 28A-28D may extend from less than one foot to more than six feet from the rigid post section 18.

The exemplary barrier material 70 comprising netting 80 is coupled to a plurality of coupling elements 48 and rods 86. The coupling elements 48 additionally join pairs of flexible arms 28A-28D, wherein each coupling element 48 joins two separate arms 28A-28D from separate fencing devices. For example, a first coupling element 48A joins a first arm 28A from a first second version 24 and a second arm 28B of another second version 24; and a coupling element 48 joins a third arm 28C from the first second version 24 with a fourth arm 28D of the neighboring second version 24. The coupling element 48 may be or comprise a length hose, such as a length of fuel line or vacuum tubing, such as a fuel line conforming to the J30 or J30R7 fuel and oil hoses standard as published by the Society of Automotive Engineers of Warrendale, PA, or other suitable tubing, hose or material known in the art.

A plurality of rods 86 are positioned to be in contact with the ground material 40 and are each held in place by one or more garden staples 88. The combination of rods 86 and garden staples 88 further pull the netting 80 downward to the ground material 40. The combination of rods 86 and garden staples 88 are positioned along a ground side 80A of the netting 80. In one exemplary preferred embodiment of the present invention, one or more of rods 86 may comprise a flexible linear length of steel, aluminum or iron rebar having a nominal diameter in the range from 0.250 inch 0.375 inch.

A rigid top wire 90 extending from the top positioned coupling element 48A extends away from the ground material 40 and away from a top side 80B of the netting 80. The rigid top wire 90 maintains a flag 92 distally from the ground material 40. The top wire 90 may be or comprise a plastic polymer, iron, steel, aluminum or copper or other suitable material known in the art, and is preferably sized as within the range of Wire Number One to Ten, i.e., the range of American Wire Gage from 0.289 inches to 0.102 inches.

The flag 92 provides a visual aspect that discourages certain animals, such as deer 72, from attempting to jump the netting 80. The flag 92 may be or comprise organic , or inorganic, or plastic fabric or other suitable material known in the art, and preferably has a surface area exceeding six square inches and may be colored red, yellow or other color.

The netting 80 is preferably positioned to vertically extend more than 6 feet above the ground material 40 and most preferably to extend for 7 feet or higher above the ground material 40 to discourage deer 72 and other animals from attempting to breach or jump over the netting 80. The netting 80 may be or comprise cellulose, plastic polymer, natural or synthetic cloth, textile fabric, synthetic fiber fabric, natural fiber fabric, polyethylene, biodegradable plastic, or other suitable material known in the art. The netting 80 is permeable to air flow and may be or comprise one or more sheets of polyethylene mesh, trellis netting, Ross Deer Netting (TM) deer netting material, a sheet of Wild Life Netting (TM), Burpee Garden (TM) trellis netting marketed by W. Atlee Burpee & Co. of Warminster, PA, or other suitable netting known in the art.

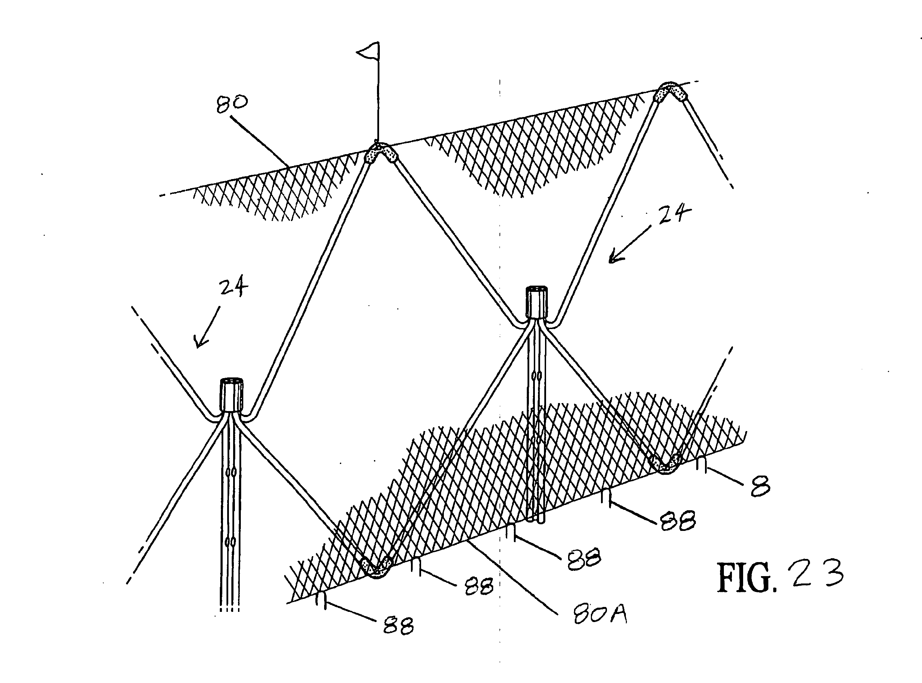

Referring now to Figure 23, Figure 23 is an illustration of the netting 80 attached to and supported by the plurality of second versions 24 of Figure 1 wherein the rods 86 have not been deployed and the netting 80 is secured directly by the plurality of staples 88 along the ground side 80A of the netting 80.

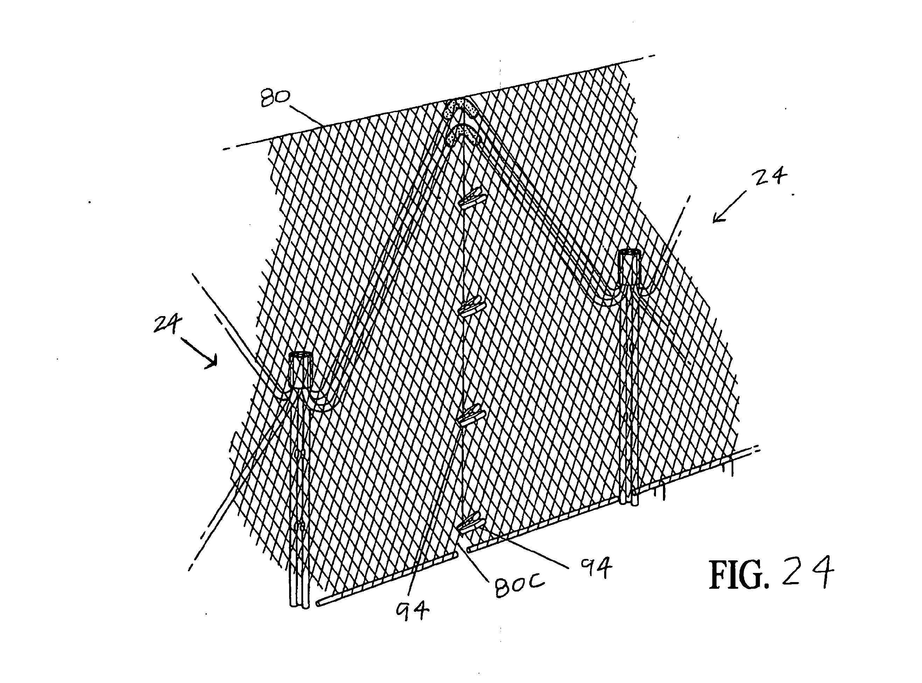

Referring now to Figure 24, Figure 24 is an illustration of the netting 80 having a vertical barrier slit 80C that extends to the ground side 80A of the netting 80 and optionally to the top side 80B. The barrier slit 80C is maintained in a closed positioned by a plurality of spring loaded clips 94.

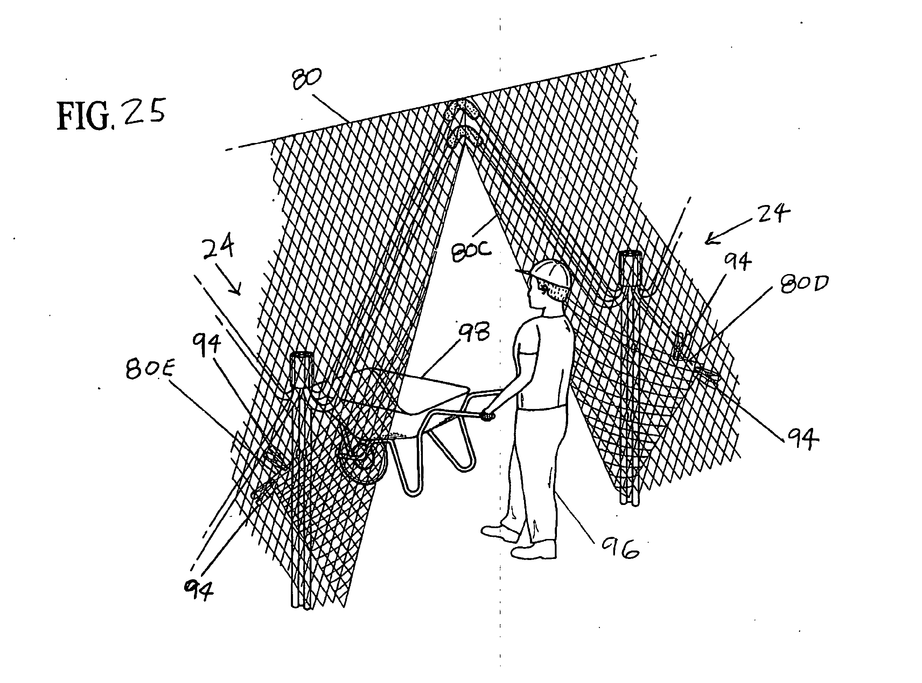

Referring now to Figure 25, Figure 25 is an illustration of the vertical barrier slit 80C configured in an open position. The plurality of spring loaded clips 94 maintains a first vertical side 80D of the netting 80 and a second vertical side 80E of the netting 80 in compression against the netting 80 to maintain the vertical barrier slit 80C in the open position. A worker 96 may pass through netting 80 when the vertical barrier slit 80C is maintained in the open position. The worker 96 may additional carry equipment through the vertical barrier slit 80C when configured in the open position, as well as push wheeled vehicle through the vertical barrier slit 80C, such as a wheelbarrow 98.

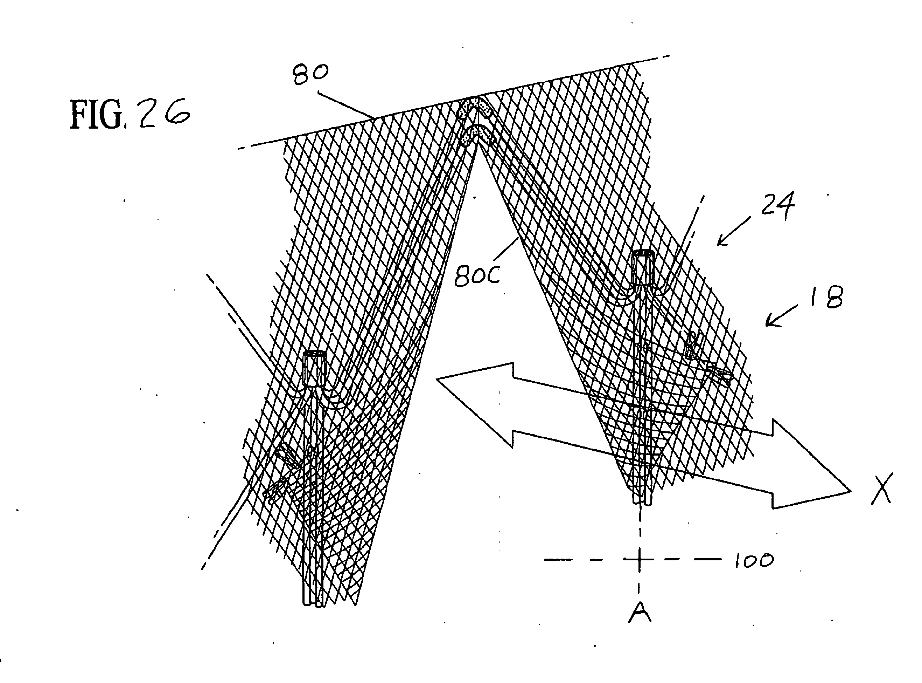

Referring now to Figure 26, Figure 26 illustrates an axis of movement X that is parallel to a top ground surface 100 of the ground material 40 and is normal to the central elongate axis A of the post sections 18 of the second versions 24. The worker 96 may pass along the axis of movement X when passing through the netting 80 when the vertical barrier slit 80C when configured in the open position of Figure 4.

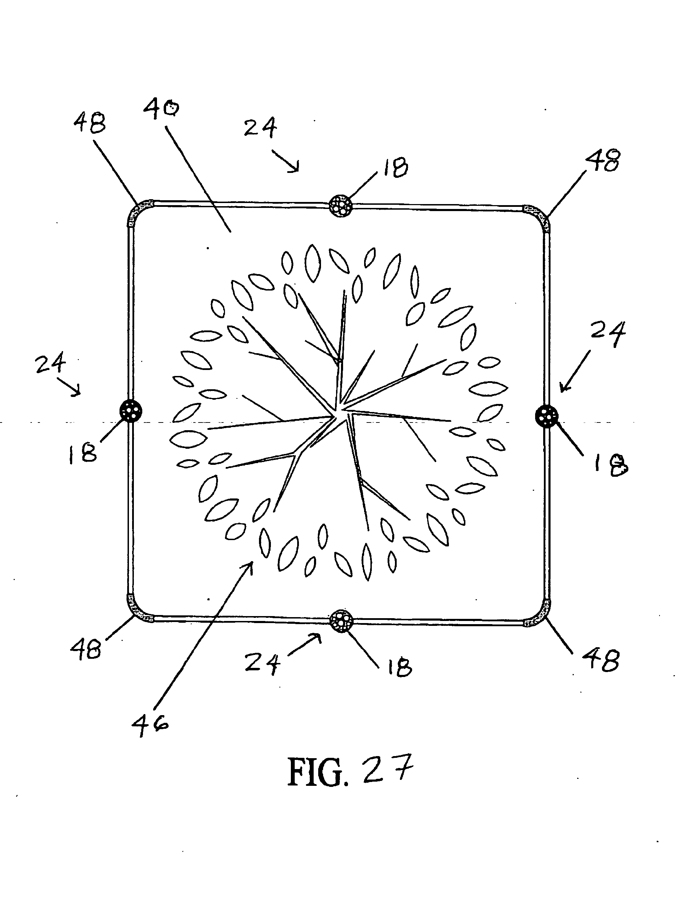

Referring now generally to the Figures and particularly to Figure 27, Figure 27 is a top view of a plurality of second versions 24 wherein the second versions 24 are positioned and coupled to surround the tree 46, or other plants or seedlings. Each rigid post section 18 of each of four second versions 24 are partially driven into the ground material 40 and each flexible arm 28A-28D is coupled to a flexible arm 28A-28D of a neighboring second version 24 by insertion into coupling elements 48.

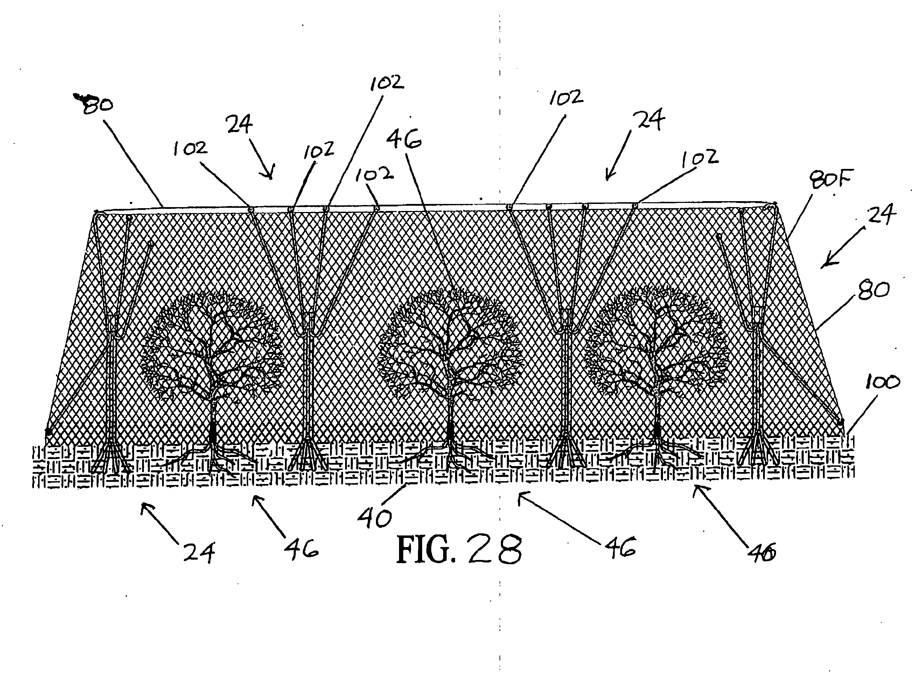

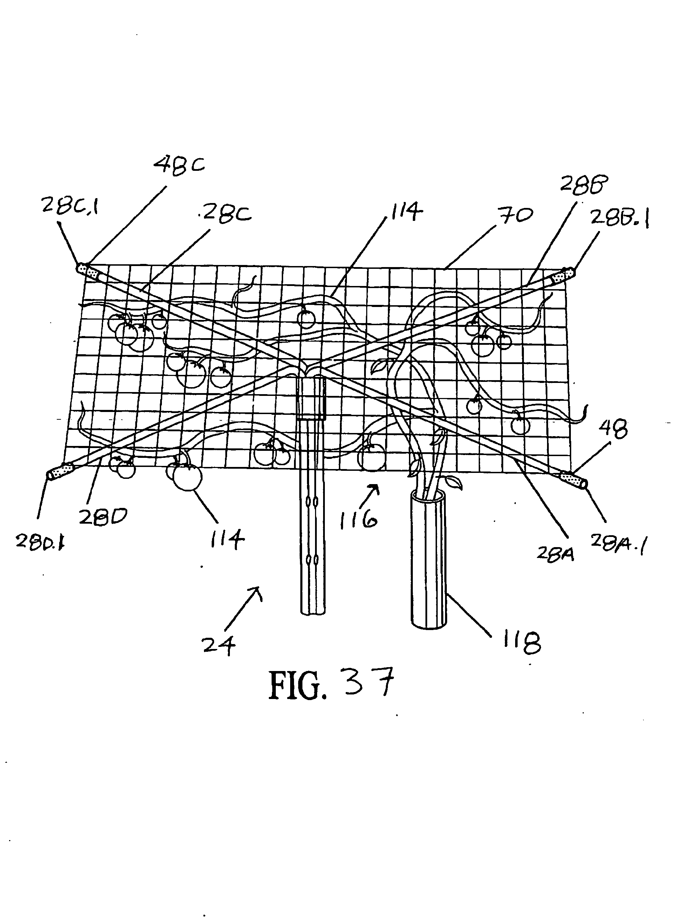

Referring now generally to the Figures and particularly to Figure 28, Figure 28 is a side view of a plurality of second versions 24 configured to support the barrier material 70, such as the netting 80, to encircle around and provide cover over a plurality of trees 46, or other plants or seedlings. Selected flexible arms 28A-28D are each fitted with a spherical ball 102 and are positioned to extend both away from the collar 26 of the same second version 24 and substantively vertically upward and away from the ground material 40, a plurality of coupling elements 48 are used to couple the remaining flexible arms 28A-28D together as shown in Figures 21 through 27. The spherical balls 102 may be balls of Styrofoam (TM) plastic material, or other suitable material known in the art, into which a distal end 28A.1-28D.1 (as illustrated in Figure 37) of the selected flexible arms 28A-28D are pressed into. The spherical balls 102 preferably having a diameter equal to or greater than twice the size of the openings 80F of the netting 80. Alternatively, the spherical balls 102 may be objects that present a surface are to the netting 80 that is preferably equal to or greater than twice the size of the openings 80F of the netting 80.

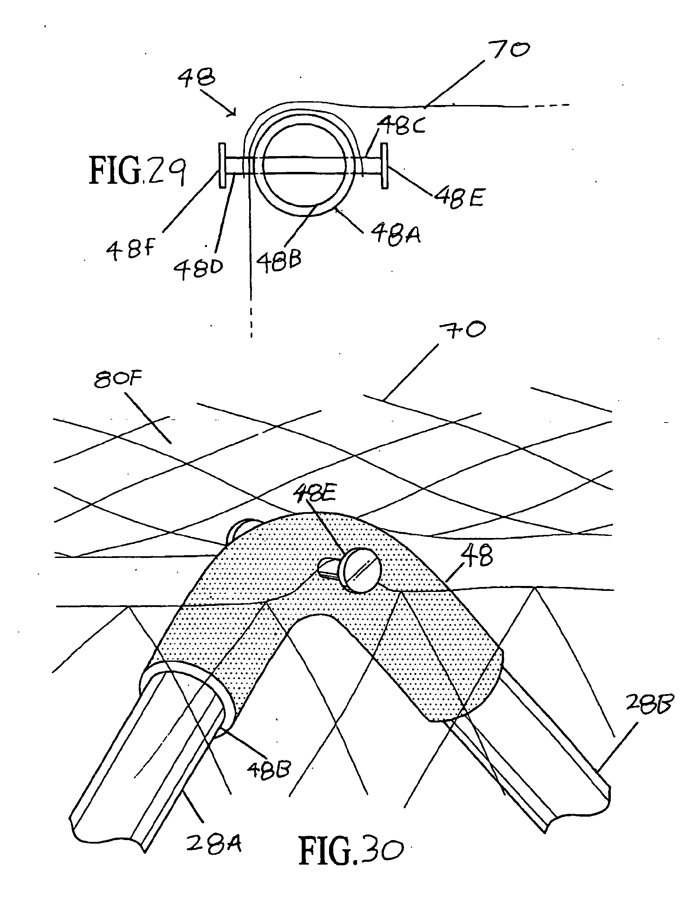

Figure 29 is a side view of the coupling element 48. The coupling element 48 includes a coupler body 48A that may be formed of organic or synthetic rubber. The coupler body 48A is sized to accept a flexible arm 28A-28D within an internal channel 48B formed within and by the coupler body 48A. The internal channel 48B may have an internal diameter of less than 0.25 inches and is configured to form a friction fit with a distal end of one or two flexible arms 28A-28D. The coupling element 48 further comprises double headed pin 48C having a pin shaft 48D that extends through the coupler body 48A and presents a pair of heads 48E and 48F useful to capture the barrier material 70 and the netting 80.

Figure 30 is a perspective view of the coupling element 48 forming a friction fit with both the first flexible arm 28A of the second version 24 and the second flexible arm 8B of the neighboring second version 24 by insertion of both pictured flexible arms 28A and 28B into the inner channel 48B of the coupling element 48.

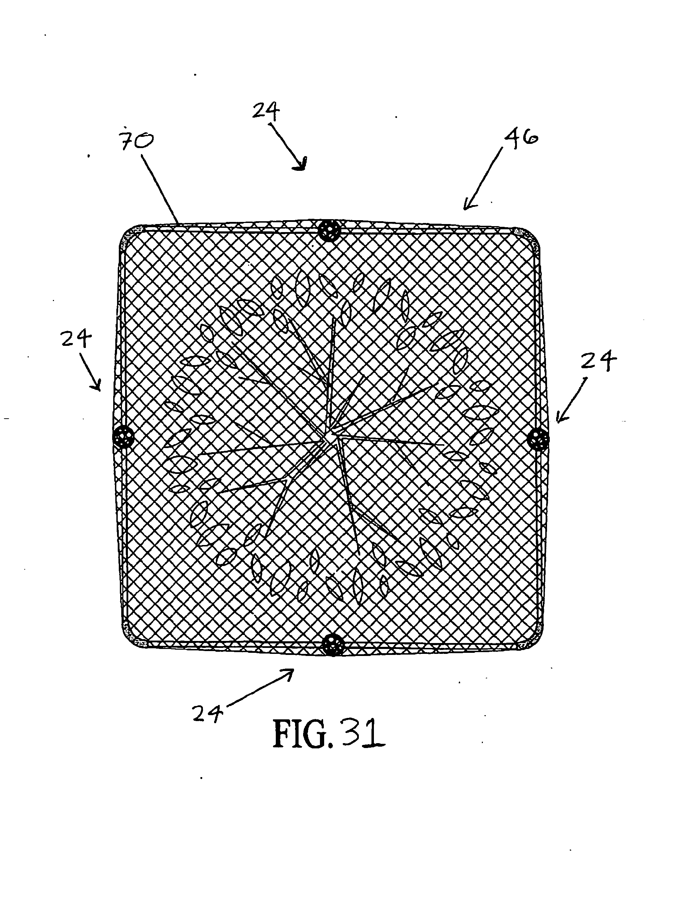

Figure 31 is a top view of a plurality of second versions 24, wherein the second versions 24 are positioned and coupled to both encircle the tree 46 and additionally to provide top cover over the tree 46 with an additional sheet of barrier material 70. The additional sheet of barrier material 70 may be one or more sheets of material that comprise cellulose, plastic polymer, natural or synthetic cloth, textile fabric, synthetic fiber fabric, natural fiber fabric, polyethylene, biodegradable plastic, polyethylene mesh, trellis netting, Ross Deer Netting (TM) deer netting material, a sheet of Wild Life Netting (TM), Burpee Garden (TM) trellis netting marketed by W. Atlee Burpee & Co. of Warminster, PA, or other suitable material known in the art.

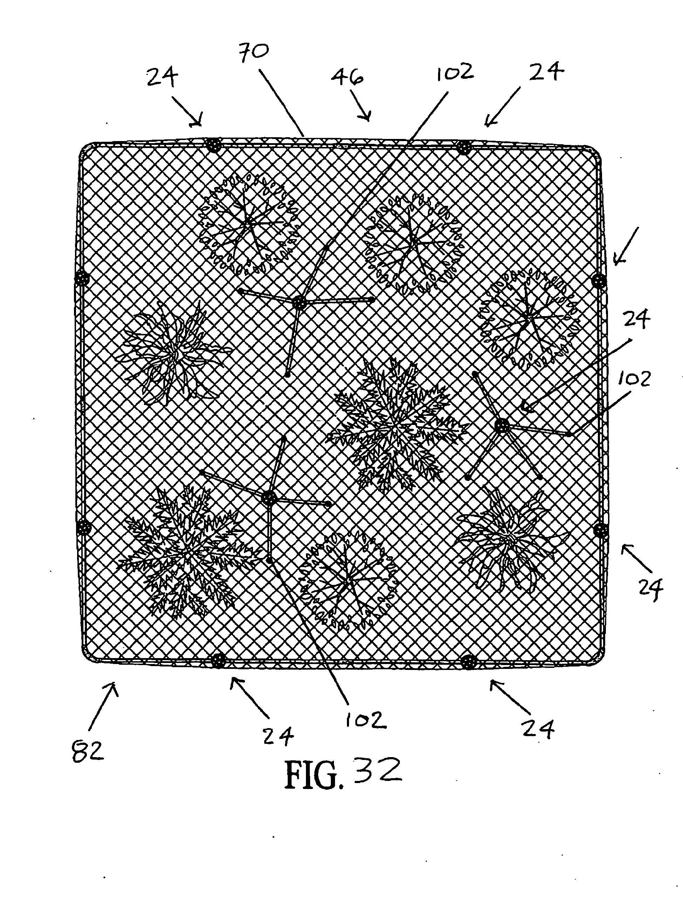

Figure 32 is a top view of a plurality of second versions 24 positioned and coupled to both encircle a plurality of trees 46 and to provide top cover over the plurality of plants 82. Three second versions 24 are located internally within an area defined and encompassed by eight border-defining second versions 24 that surround the plurality of trees 46 and plants 82. The internally located second versions 24 are fitted with Styrofoam (TM) polystyrene foam balls 102 at the distal ends of flexible arms 28A-28D and support the additional sheet of barrier material 70 to provide top cover to the plurality of plants 82 and tees 46. The additional sheet of barrier material 70 may protect the plurality of plants 82 and trees 46 from damage caused by birds.

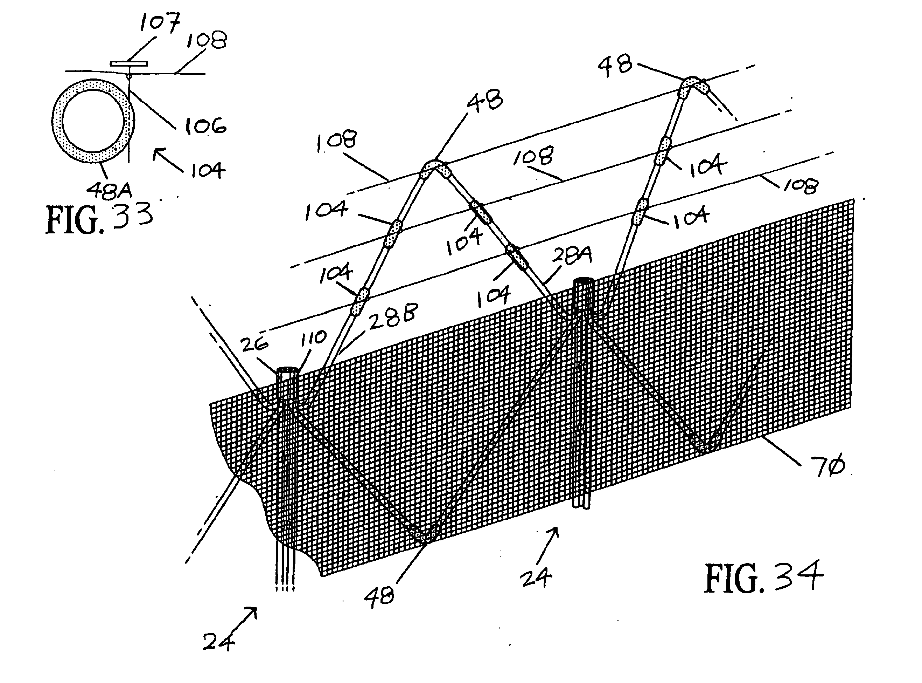

Figure 33 is a side view of an alternate coupling element 104 of the coupling element 48. The alternate coupling element 104 includes the coupler body 48A and a pin 106 that pierces a side of the coupler body 48A while exposing a head 107 of the pin 106. The head 107 attached to the pin 106 is exposed to enable a line 108 to be wrapped around the pin 106.

Figure 34 is a perspective view of an alternate configuration of the second versions 24 and barrier material 70, wherein the barrier material 70 is reduced in height to extend from the ground surface 100 to the collar 26 of each second version 24. A latch 110 extends from each collar 26 to capture and support the barrier material 70. The barrier material 70 is further captured by the plurality of coupling elements 48 that are attached to the distal ends 28C.1 and 28D.1 of the third and fourth flexible arms 28B and 28D. A plurality of lines 108 extend horizontally along a plurality of alternate coupling elements 104 positioned along the first and second flexible arms 28A and 28B. A top line 108A extends horizontally along a plurality of coupling elements 48 positioned along the distal ends 28A.1 and 28B.1 of the first and second flexible arms 28A and 28B.

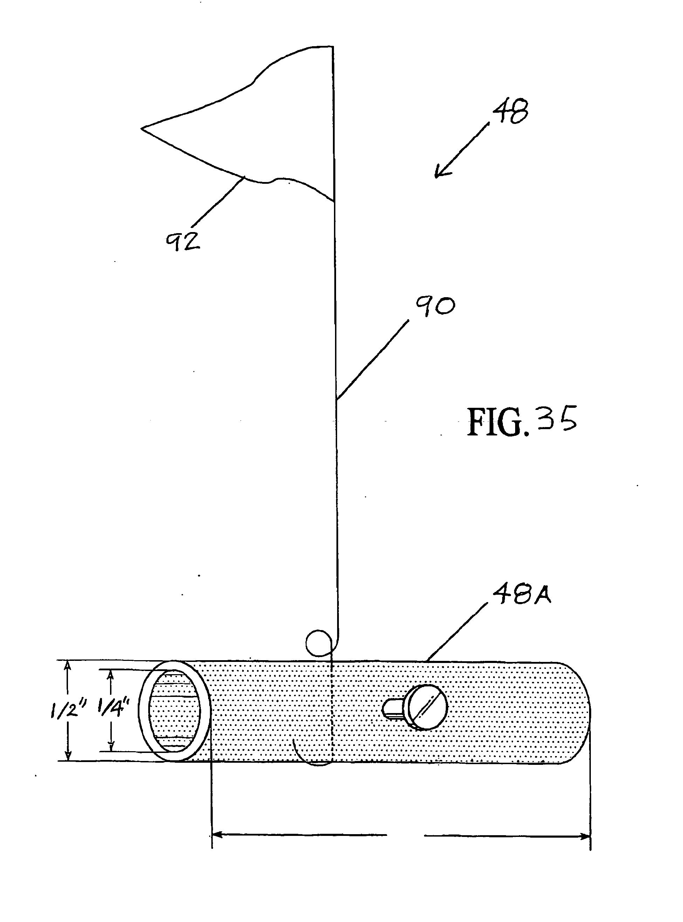

Figure 35 is a side perspective view of the coupling element 48. The rigid top wire 80 pierces the tubular coupler body 48A and preferably maintains the flag 92 at a distance of from 3 inches to two feet away from the coupling element 48. The inner channel 48B has a cross-sectional diameter of 0.25 inches and the tubular body 18A forms a cross-sectional outer diameter of 0.5 inches of is composed of a hollowed flexible material having a thickness of 0.25 inch. The coupling element 48 has a linear length of 2.0 inches.

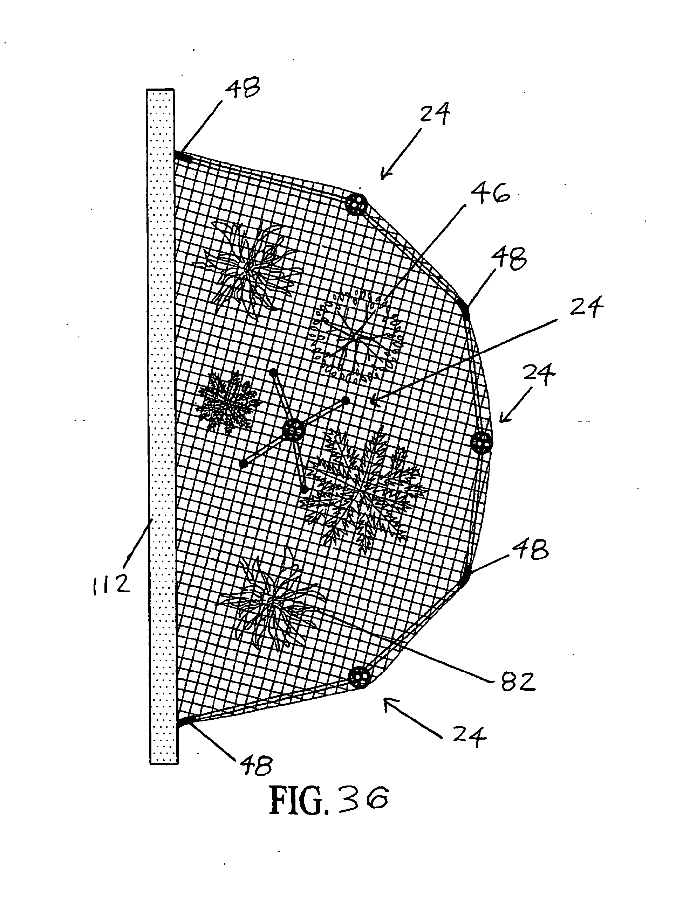

Figure 36 is a top view of a plurality of second versions 24, wherein the second versions 24 are positioned and coupled to both encircle a plurality of trees 46 and plants 82 in combination with a wall 112 and to also provide top cover by means of the additional sheet of barrier material 70 over the plurality of plants 82.

Figure 37 is a perspective side view of the second version 24 of wherein the flexible arms 28A-28D are positioned to orient the barrier material 70 in a horizontal position to support plant elements 114 of a tomato plant 116. A protective tube 118 guides the tomato plant 116 up from the ground surface 100 to extend through above and onto the barrier material 70. The barrier material 70 is captured by the coupler pins 48C of the plurality of coupling elements 48 that are attached to the plurality of flexible arms 28A-28D at the distal ends 28A.1-28D.1

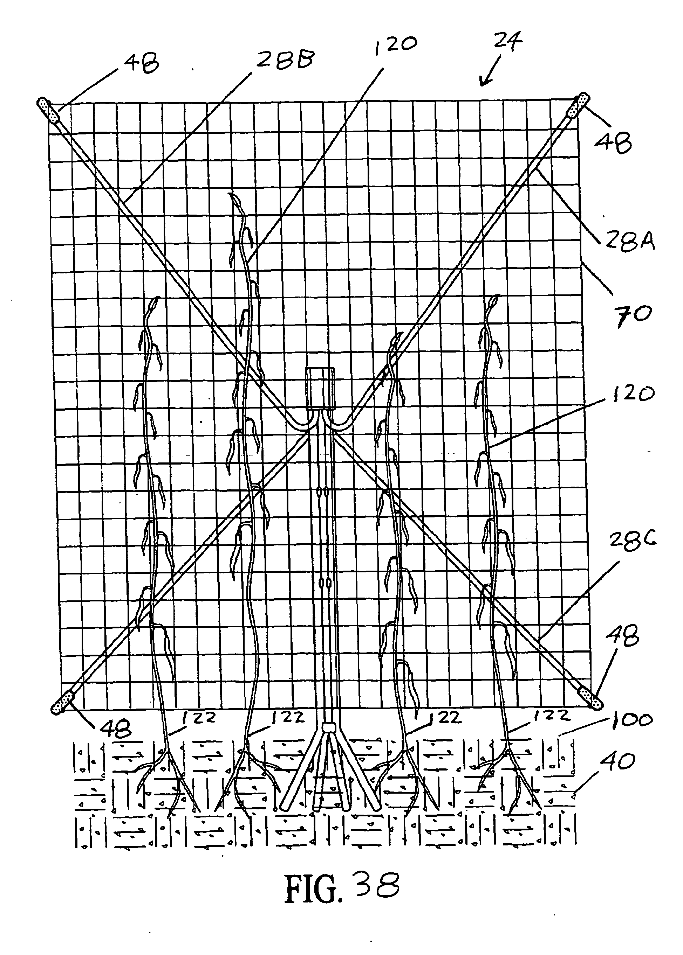

Figure 38 is a cut-away side view of the second version 24, wherein the flexible arms 28A-28D are positioned to orient the barrier material 70 in a vertical orientation to support vine elements 120 of a plurality of vines 122.

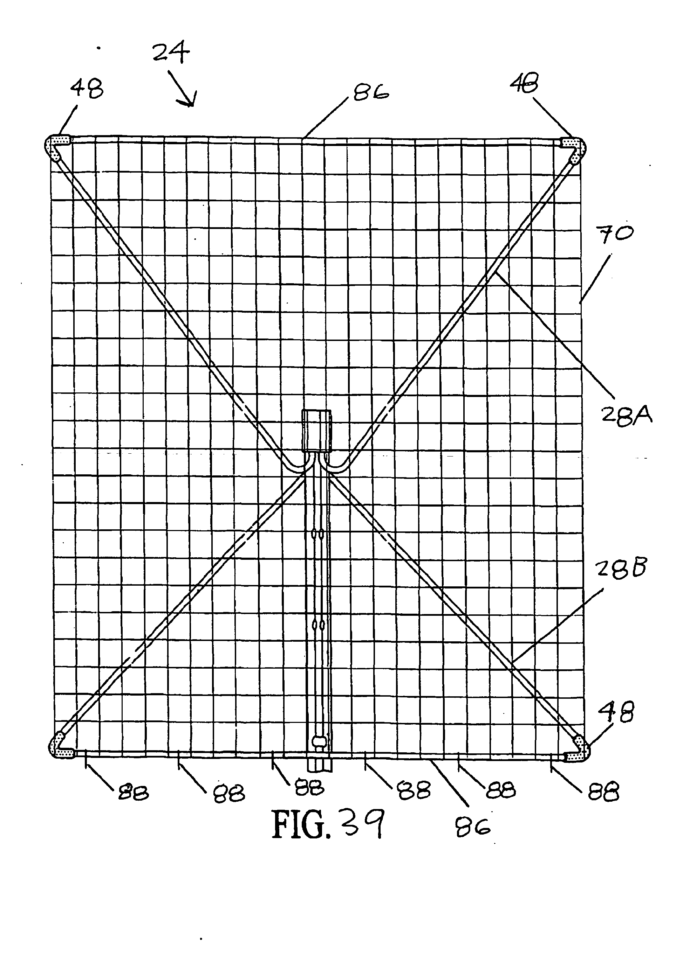

Figure 39 is a front view of the second version 24, wherein the flexible arms 28A-28D are positioned to orient the barrier material 70 in a vertical orientation and coupled to rods 86 to provide additional tension to the barrier material 70. Each of the two rods 86 is coupled to two flexible arms 28A-28C by means of coupling elements 48.

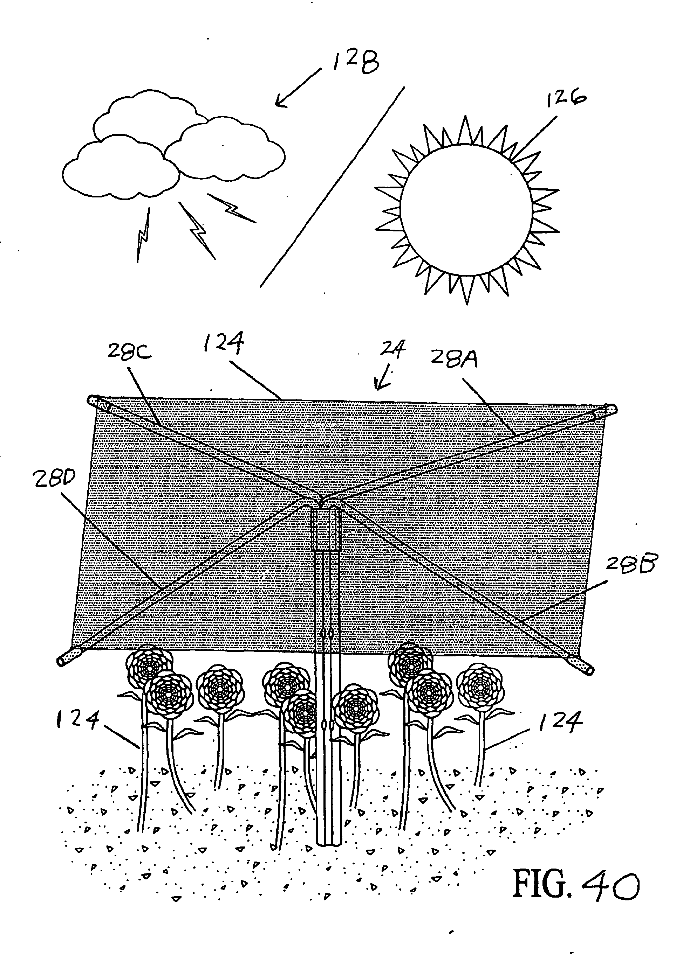

Figure 40 is a perspective side view of the second version 24 wherein the flexible arms 28A2-8D are positioned to orient a shading material 124 in a horizontal position to protect sun-sensitive plants 124 from the sun 126 or exposure to inclement weather 128. The shading material 124 may be or comprise cellulose, plastic polymer, natural or synthetic cloth, textile fabric, synthetic fiber fabric, natural fiber fabric, polyethylene, biodegradable plastic, or other suitable material known in the art.

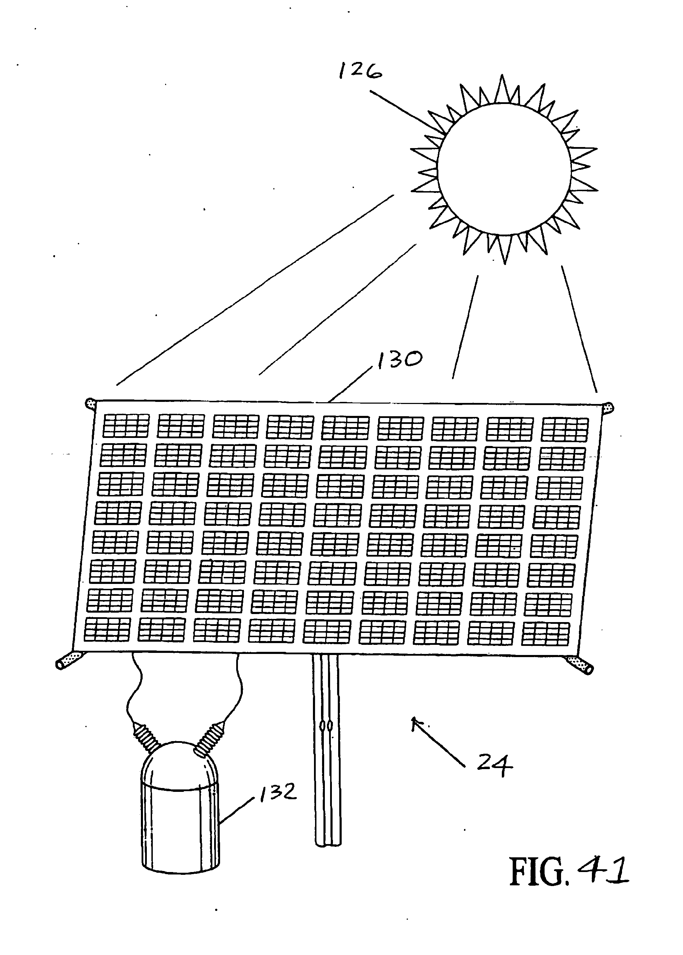

Figure 41 is a perspective side view of the second version 24, wherein the flexible arms 28A-82D are positioned to orient a solar energy collection panel 130 in a horizontal position and facing the sun 126. The solar energy collection panel 130 may be or comprise a thin film solar panel marketed by Nanosolar Corporation of San Jose, CA or a thin film solar panel marketed by First Solar Corporation of Tempe, Arizona. The plurality of pins 48C of the coupling elements 48 secures the solar energy collection panel 130 to the second version 24. A battery 132 is electrically coupled to the solar energy collection panel 130 and receives electrical energy from the solar energy collection panel 130 for storage and later use.

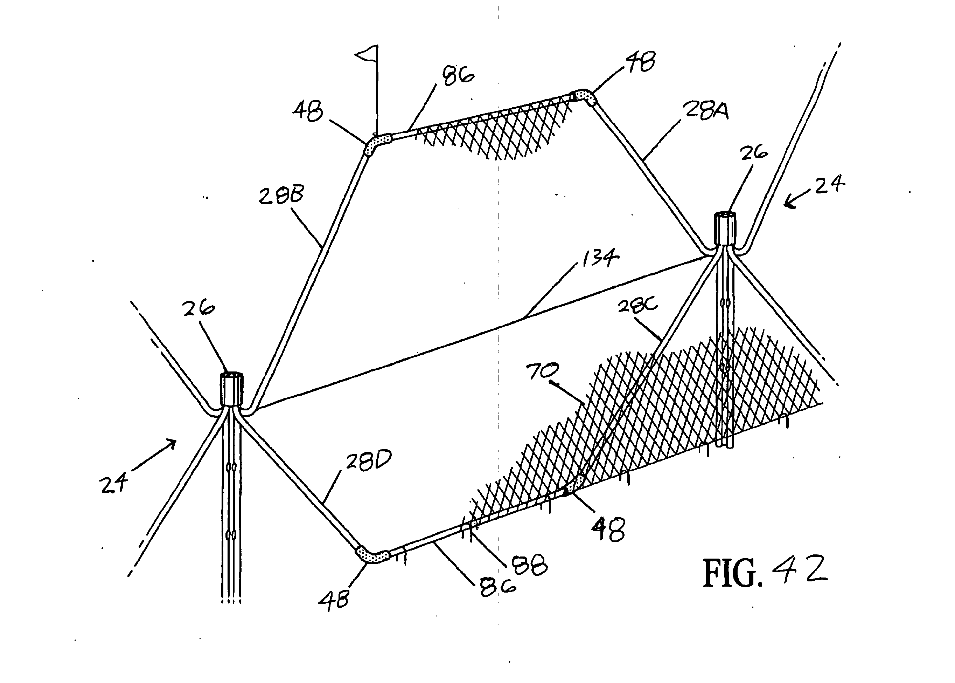

Figure 42 is an illustration of the plurality of second versions 24 holding the barrier material 70 in place, wherein the rods 86 are coupled with flexible arms 28A-28D of the second versions 24 and a support line 134 is added to provide support to the barrier material 70. The support line 134 may be wrapped around or below the collars 126 to be secured to the second versions 24. The rods 86 may present a linear length with plus or minus 5% or closer tolerance to a common linear length of the flexible arms 28A-28D, wherein the two rods 86 and the flexible arms 28A-28D form a hexagon of approximately equal sides within a plus or minus 5% tolerance or linear length deviation, or a lower deviation. The rods 86 are each coupled to a different pair of flexible arms 28A-28D by friction fit into a pair of coupling elements 48.

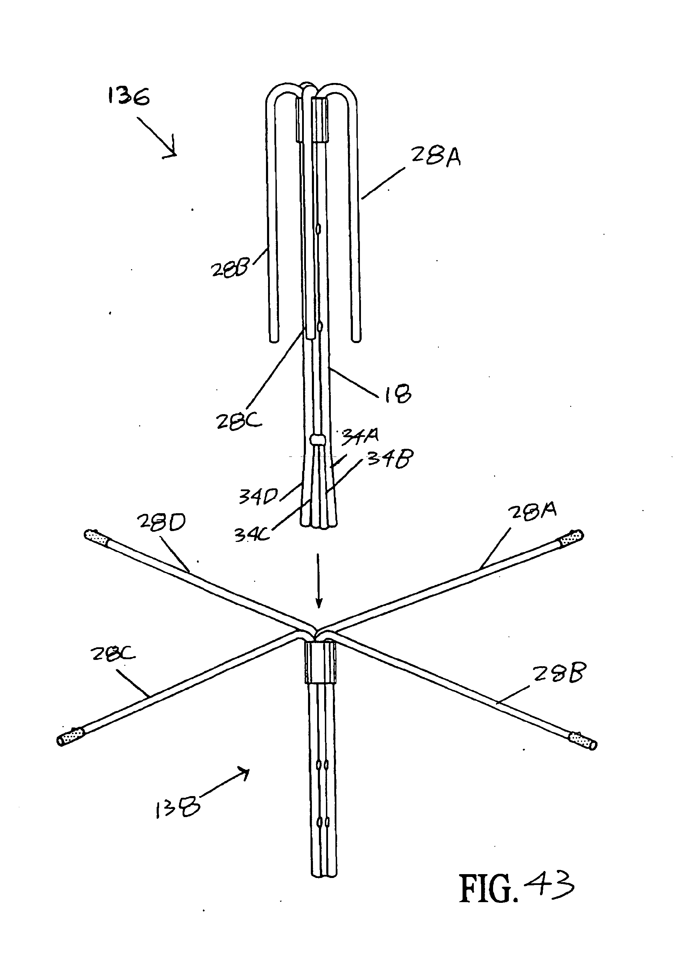

Figure 43 is a perspective side view of two substantially identical third versions 30, or "trellis devices" 136 & 138, wherein the first trellis device 136 is shown in a shipping configuration and the second trellis device 138 is shown in a deployed configuration with the flexible arms 28A-28D formed to support a substantively horizontal plane.

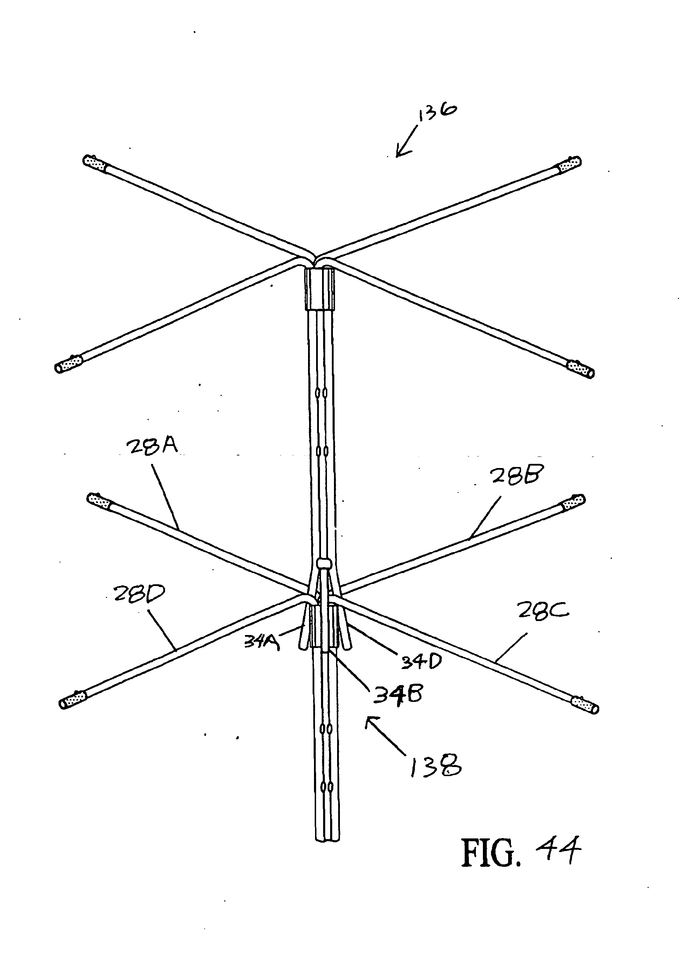

Figure 44 is a perspective side view of the first trellis device 136 and the second trellis device 138 removably coupled. A lower plurality of tines 34A-34D of the second trellis device 138 have been forced into a resistive ground material 40 and are splayed away from the axis A as a result of the application of the downward directed force that drove the lower plurality of tines 34A-34D into the ground material 40. The lower plurality of tines 34A-34D are formed of a portion of each elongate element 4A-4D of the second trellis device 138 that extends from a lower weld 12D that is located most distally from the collar 26 of the second trellis device 138. Each of the lower plurality of tines 34A-34D extends away from both the lower weld 12D and substantively away from the collar 10 of the second trellis device 76.

A higher plurality of tines 34A-34D of the first trellis device 138 have been shaped to fit around the collar 26 and the plurality of flexible arms 28A-28D of the second trellis device 138. The higher plurality of tines 34A-34D are formed of a portion of each elongate element 4A-4D of the first trellis device 136 that extends from a higher device weld 12D that is located most distally from the collar 26 of the first trellis device 136.

The barrier material 70, the netting 80, the solar energy collection panel 130, or the shade material 124 may be coupled to one or more flexible arms 28A-28C of the first trellis device 136 and/or the second trellis device 138.

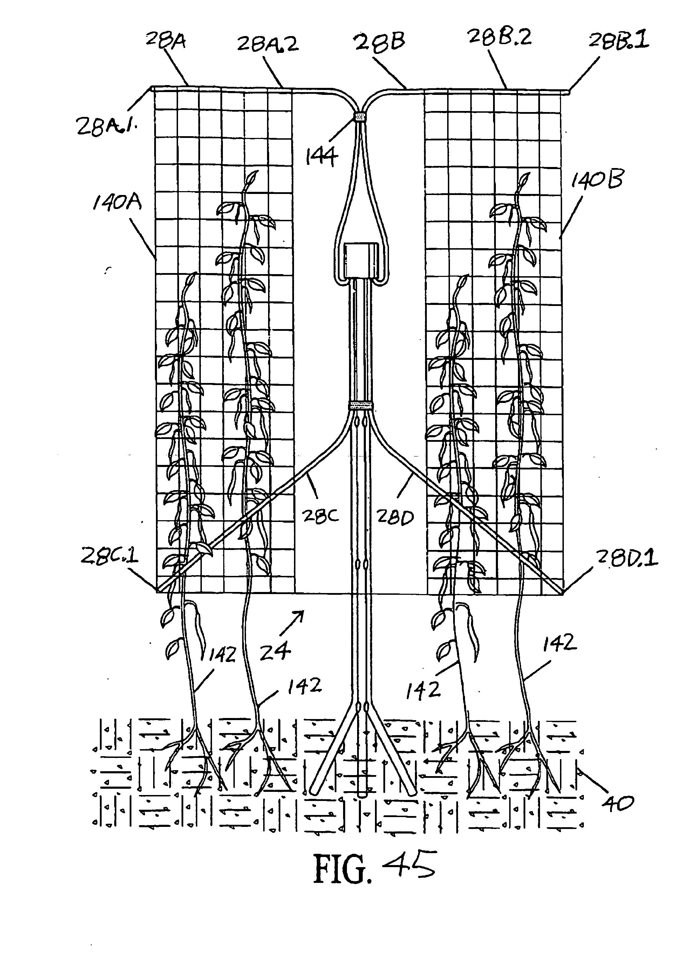

Referring now generally to the Figures and particularly to Figure 45, Figure 45 shows the second version 24 anchored in the ground material 40 and having two pairs of flexible arms 28A-28C & 28B-28D separately configured to each support and position a separate sheet of a trellis netting 140A & 140B. Individual vines 142 are shown extending from the ground material 40 and being supported by trellis netting 140A & 140B. The two upward extending flexible arms 28A & 28C are bound together by a top binding element 144 to provide more stability to each of these two upward extending flexible arms 28A & 28B. The top binding element 144 may be plastic or metal wire or other suitable material for compressing the two upward extending flexible arms 28A & 28B together. Each pair of flexible arms 28A-28C & 28B-28D may act as tensioning elements to maintain a sheet of trellis netting under tension.

Each of the four flexible arms 28A-28D may be individually positioned to change its orientation in relation to the ground material 40 and the sun (not shown). The individual sheets of trellis netting 140A & 140B may thereby by oriented by the positioning of the respective flexible arm pairs 28A-28C & 28B-28D to orient the vines 142 as desired by a gardener or agricultural worker.

The trellis netting 140A & 140B may be permeable to air flow and may be or comprise one or more sheets of polyethylene mesh, trellis netting, Burpee Garden (TM) trellis netting marketed by W. Atlee Burpee & Co. of Warminster, PA, Ross Deer Netting (TM) deer netting material, a sheet of Wild Life Netting (TM), or other suitable netting or barrier material known in the art. Alternatively, the trellis netting 140A & 140B may be or comprise a solar energy collection fabric, such as, but not limited to, a thin film solar panel marketed by Nanosolar Corporation of San Jose, CA or a thin film solar panel marketed by First Solar Corporation of Tempe, Arizona. Still additionally or alternatively, the trellis netting 140A & 140B may be or comprise a plurality of string lengths 146.

A distal length 28A.2-28D.2 of each of one or more flexible arms 28A-28D extends approximately from a distal arm end 28A.1-28D.2. The distal length 28A.2-28D.2 of at least one arm 28A-28D may extend along a horizontal plane H plus or minus 10 degrees. Two or more distal lengths 28A.2-28D.2 of two or more arms 28A-28D may be co-planar within plus or minus 10 degrees of the horizontal plane H. One or more distal ends 28A.1-28D.1 of at least one arm 28A-28D may form a 90 degree angle within plus or minus 10 degrees in the horizontal plane H with at least one other distal length 28A.2-28D.2 of another flexible support arm 28A-28D. One or more distal length 28A.2-28D.2 of each arm 28A-28D is positionable within a 120 degree arc of the horizontal plane H. One or more distal length 28A.1-28D.1 preferably extends from within 0.25 inch of a distal arm end 28A.1-28D.1 of a same flexible support arm 28A-28D. One or more distal lengths 28A.1-28D.1 preferably extend from the top binding element 144 to a distal arm end 28A.1-28D.1.

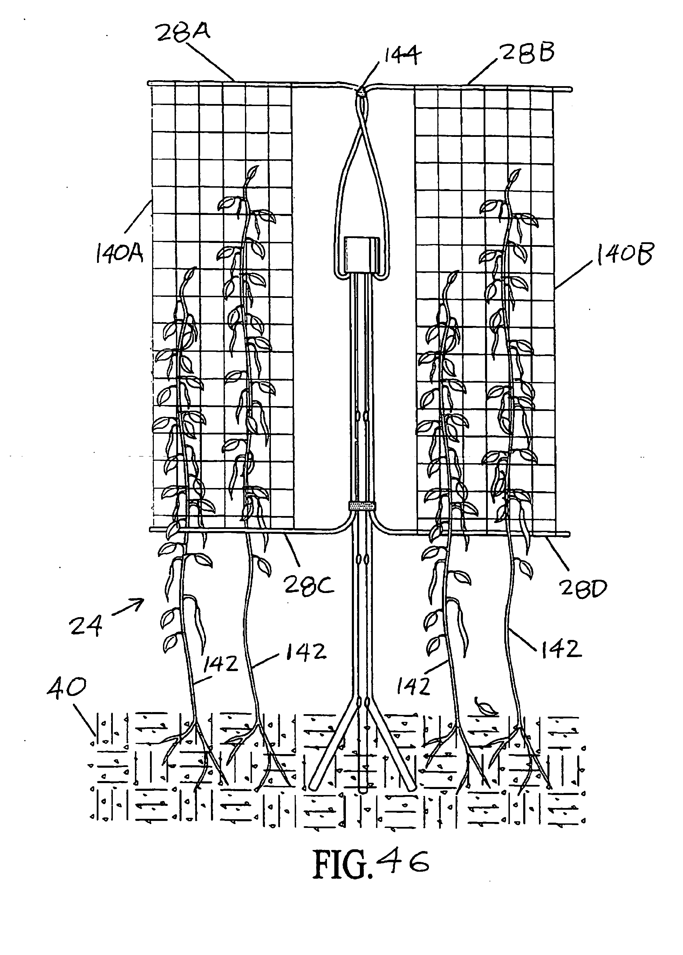

Referring now generally to the Figures and particularly to Figure 46, Figure 46 shows the second version 24 anchored in the ground material 40 and having two pairs of flexible arms 28A-28C & 28B-28D separately configured to each support a separate length of trellis netting 140A& 140B in a wider configuration then as shown in Figure 45. Each pair of flexible arms 28A-28C & 28B-28D may optionally act as tensioning elements to maintain a sheet of trellis netting under tension.

The two upward extending flexible arms 28A & 28B are twisted about each other as well as bound together by the top binding element 144 to provide more stability to each of these two upward extending flexible arms 28A & 28B. Each of the lower flexible arms 28C & 28D of the flexible arm pairs 28A-28C & 28B-28D are positioned in an L shape, whereby the lower flexible arms 28C & 28D are coupled with each horizontal edge 28A & 28B of the separate sheets of trellis netting 140A & 140B to maintain and support the trellis netting 140A & 140B in tension.

It is understood that the trellis netting 140A & 140B may alternatively be or comprise a deer netting, a deer fencing, a barrier material, and/or a solar energy collection fabric, such as, but not limited to, a thin film solar panel marketed by Nanosolar Corporation of San Jose, CA or a thin film solar panel marketed by First Solar Corporation of Tempe, Arizona.

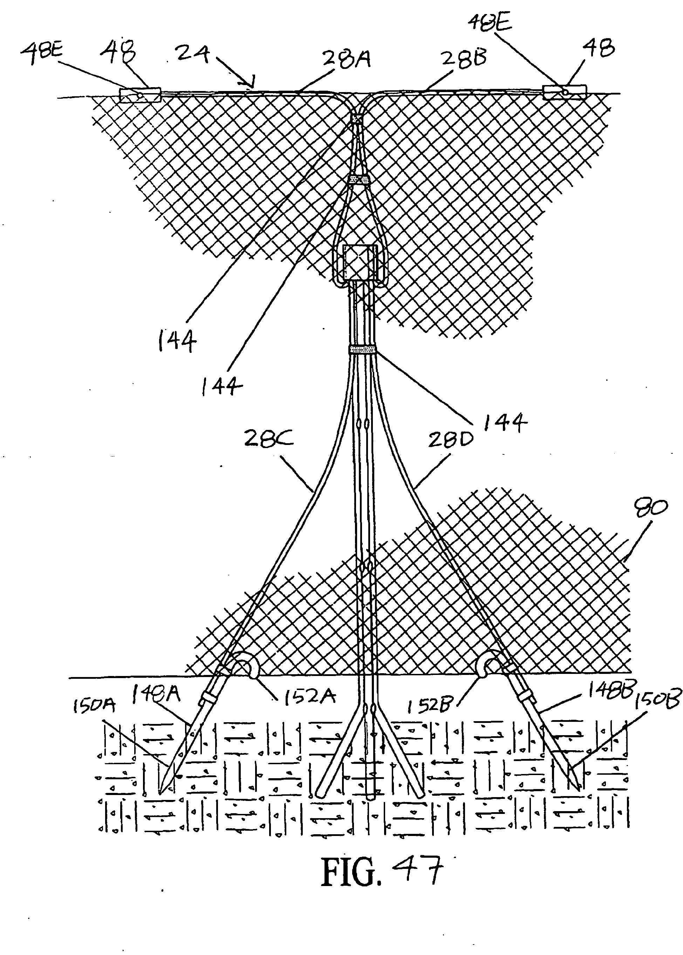

Referring now generally to the Figures and particularly to Figure 47, Figure 47 shows the second version 24 anchored in the configuration of Figure 22 and additionally having ground coupling extension elements 148A & 148B, or hooked elements 148A & 148B, attached to the two lower positioned flexible arms 28C & 28D. A ground length 150A & 150B of each hooked element 148A & 148B extend into the ground material 40 and a hook length 152A & 152B of each hooked element 148A & 148B extends above the ground material 40. Each hooked element 148A & 148B is coupled with a single lower positioned flexible arm 28C & 28D by a hook binding element 154A-154D, such as wire metal, string, cord or rope. Trellis netting 140A or a barrier material 70 may be coupled with one or more hooked elements 148A & 148B by insertion of a hook length 152A & 152B through the trellis netting 140A or barrier material 70. The two upward extending flexible arms 28A & 28B are bound together by two separate top binding elements 144 to provide more stability to each of these two upward extending flexible arms 28A & 28B. Each pair of flexible arms 28A-28C & 28B-28D may act as tensioning elements to maintain a sheet of trellis netting 140A & 140B under tension.

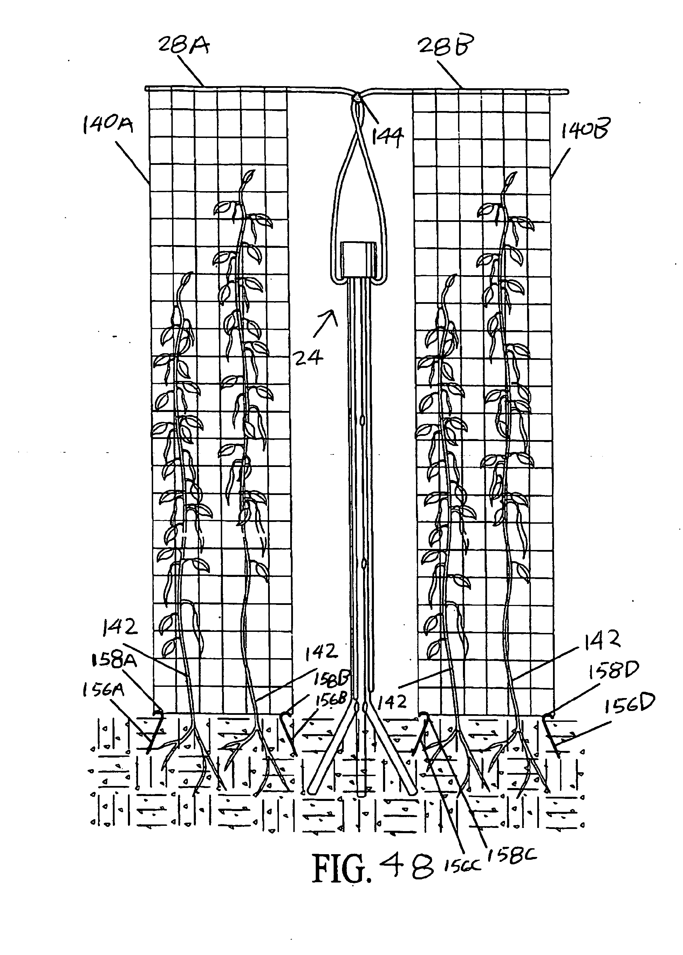

Referring now generally to the Figures and particularly to Figure 48, Figure 48 shows the second version 24 anchored in the ground material 40 and having only two flexible arms 28A & 28B deployed horizontally wherein each upper arm 28A & 28B supports a separate length of trellis netting 140A & 140B and each length of trellis netting 140A & 140B is coupled to the ground with one or more secondary hook elements 156A-156D. The two upward extending flexible arms 28A & 28B are twisted about each other as well as bound together by the top binding element 144 to provide more stability to each of these two upward extending flexible arms 28A & 28B. Each secondary hook element 156A-156D has a curved length 158A-158D that extends through and captures one of the sheets of trellis netting 140A & 140B. Each secondary hook element 156A-156D is further partially driven into the ground material 40. One or more trellis netting 140A & 140B may be maintained in tension between tensioning elements, e.g., an upward extending flexible arm 28A & 28B and one or more secondary hook elements 156A-156D.

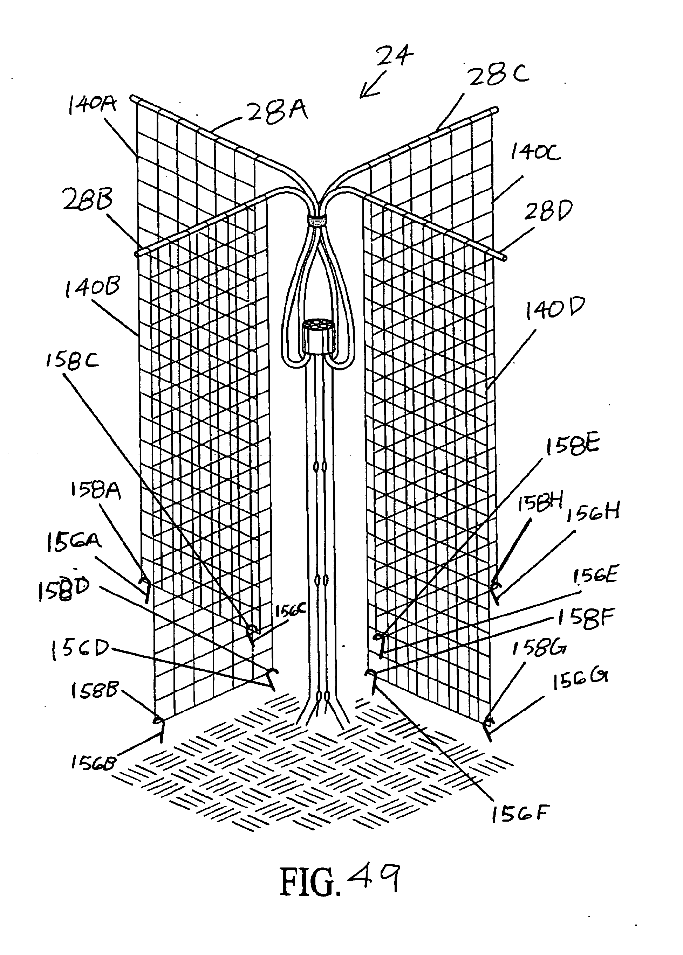

Referring now generally to the Figures and particularly to Figure 49, Figure 49 shows the second version 24 anchored in the ground material 40 and having all four flexible arms 28A-28D deployed horizontally wherein each flexible arm 28A-28D supports a separate length of trellis netting 140A-140D and each length of trellis netting is coupled to the ground with secondary hook elements 156A-156H. The four upward extending flexible arms 28A-28D are bound together by the top binding element 144 to provide more stability to each of these four upward extending flexible arms 28A-28D. Each secondary hook element 156A-156H has a curved length 158A-158H that extends through and captures a separate sheet of trellis netting 140A-140D. Each secondary hook element 156A-156H is further partially driven into the ground material 40. One or more trellis netting 140A-140D may be maintained in tension between tensioning elements, e.g., an upward extending flexible arm 28A-28D and one or more secondary hook elements 156A-156H.

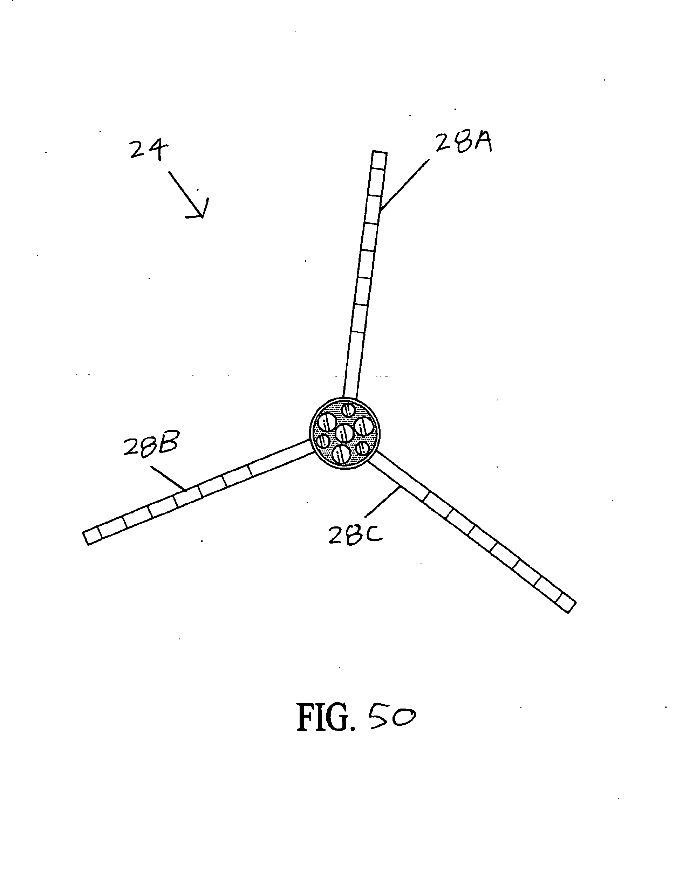

Referring now generally to the Figures and particularly to Figure 50, Figure 50 is a top view of a variation of the second version 24 wherein the second version 24 comprises only three flexible arms 28A-28C. Each of these three flexible arms 28A-28C may be shaped by a gardener or other agricultural worker to support a trellis netting 140A-140C and/or hold a trellis netting 140A-140C under tension.

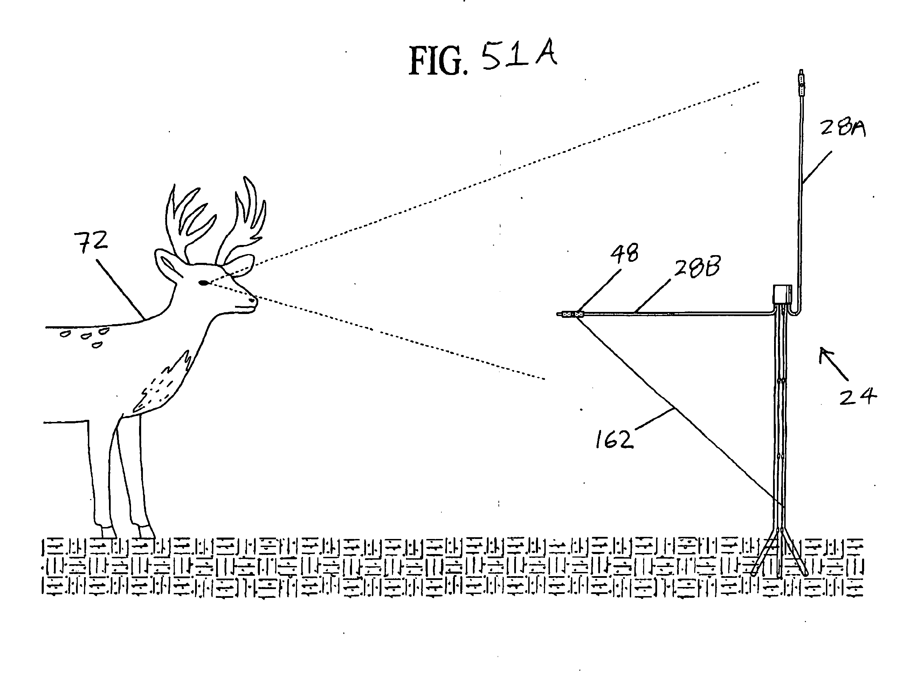

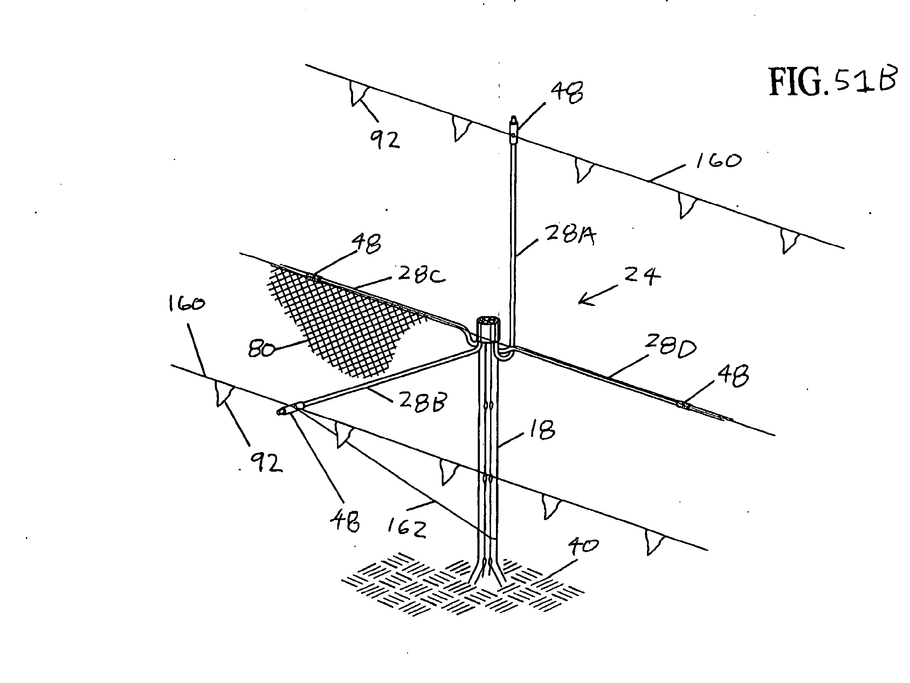

Referring now generally to the Figures and particularly to Figure 51A and Figure 51B, Figure 51A is side view of the second version 24 in use to deter animal intrusion. A first flexible arm 28A is extended substantially vertically to present a visible vertical deterrence to the deer 72, and a second flexible arm 28B is extended substantially horizontally to support a linear element 160, as shown in Figure 8B, that forms a horizontal barrier that is also intended to be visible to the deer 72.

Alternatively or additionally, either linear element 160 may be or comprise an organic threaded line, a plastic polymer, iron, steel, aluminum or copper or other suitable material known in the art, and is preferably sized as within the range of Wire Number One to Ten, i.e., the range of American Wire Gage from 0.289 inches to 0.102 inches. Alternatively or additionally, one or more flags 92 may be or comprise strips or portions of metal, plastic, fabric, or light emitting devices.

A tensioned element 162, or tensioned wire 162, is attached to the post section 18 of the second version 24 and the horizontally positioned second flexible arm 28B. The tensioned wire 162 may be in tension and pull the second flexible arm 28B both downward and toward the rigid post section 18.

The tensioned wire 162 may be or comprise a plastic polymer, iron, steel, aluminum or copper or other suitable material known in the art, and is preferably sized as within the range of Wire Number One to Ten, i.e., the range of American Wire Gage from 0.289 inches to 0.102 inches.

Referring now generally to the Figures and particularly to Figure 51A and Figure 51B, Figure 51B is a perspective view of the second version 24 in the orientation of Figure 51A and wherein the first flexible arm 28A and the second flexible arm 28B are each separately supporting the linear elements 160 that are optionally bearing flags 92. The linear elements 160 and the attached flags 92 increase the intrusion deterrent effectiveness of the second version 24 by creating a more visible barrier for perception by the deer 72 and other animals. The remaining two flexible arms 28C & 28D of the second version 24 extend substantially horizontally and orthogonally to the second flexible arm 28B, and are both coupled to a sheet material 164, such as a barrier material 70 or netting 80. The sheet material 154 may be or comprise one or more sheets of polyethylene mesh, trellis netting, Burpee Garden (TM) trellis netting marketed by W. Atlee Burpee & Co. of Warminster, PA, Ross Deer Netting (TM) deer netting material, a sheet of Wild Life Netting (TM), or other suitable netting or barrier material known in the art.

The foregoing disclosures and statements are illustrative only of the present invention, and are not intended to limit or define the scope of the present invention. The above description is intended to be illustrative, and not restrictive. Although the examples given include many specificities, they are intended as illustrative of only certain possible applications of the present invention. The examples given should only be interpreted as illustrations of some of the applications of the present invention, and the full scope of the Present Invention should be determined by the appended claims. Those skilled in the art will appreciate that various adaptations and modifications of the just-described applications can be configured without departing from the scope of the claims. Therefore, it is to be understood that the present invention may be practiced other than as specifically described herein.

## Claims

1. A device (2) comprising:
a. a first elongate element (4A), having a first anchor end (10A) and a first striking end (6A);
b. a second elongate element (4B), having a second anchor end (10B) and a second striking end (6B);
wherein the first elongate element (4A) and the second elongate element (4B) are positioned in parallel with an elongate axis (A) and wherein each striking end (6A, 6B) presents a distal striking point (20A, 20B) located within a striking plane (S) that is normal to the elongate axis (A),
wherein the elongate elements (4A, 4B) are coupled in at least two locations, including a top coupling point (12A) and a lower coupling point (12D), between the anchor ends and the striking ends, and **characterized in that** each elongate element (4A, 4B) has a tine (34A, 34B, 34C, 34D) extending from the lower coupling point wherein each tine angles away from the elongate axis,
whereby the anchor ends (10A, 10B) are drivable into a support material by a force delivered to the striking ends (6A, 6B).

2. The device of Claim 1, wherein the elongate elements (4A, 4B) comprise a metal.

3. The device of Claim 1 or Claim 2 wherein the elongate elements (4A, 4B) are coupled by a weld.

4. The device of any of the preceding Claims, wherein the elongate elements (4A, 4B) are coupled in at least an additional location (12B, 12C) between the anchor ends and the striking ends.

5. The device of any of the preceding Claims, wherein the elongate elements (4A, 4B) are solid.

6. The device of any of the preceding Claims, wherein the elongate element striking ends (6A, 6B) are coupled to an enclosing collar (26).

7. The device of Claim 6, wherein each striking end (6A, 6B)presents a distal striking point that is co-planar with a striking side of the collar (26) along a striking plane that is positioned normal to the elongate axis.

8. The device of Claim 6, further comprising a coupling point located proximate to the collar (26).

9. The device of Claim 6, wherein the elongate elements (4A, 4B) are welded with the collar (26).

10. The device of Claim 9, wherein the collar (26) comprises metal and is welded to at least one elongate element.

11. The device of any of the preceding Claims further comprising a third elongate element (4C) having a third striking end (6C) and a third anchor end (10C).

12. The device of claim 11, wherein the third elongate element (4C) comprises metal.

13. The device of any of the preceding Claims, wherein at least one elongate element (4A, 4B, 4C) is a hollow tube, preferably rebar.

14. The device of any of the preceding Claims, wherein the lower coupling point (12D) is a weld.

15. The device of any of the preceding Claims wherein said first and second elongate elements (4A, 4B) comprise two equal lengths of rebar welded at said top coupling point (12A) and at said lower coupling point (12D).

## Patentansprüche

1. Vorrichtung (2), umfassend:
a) ein erstes langgestrecktes Element (4A), das ein erstes Verankerungsende (10A) und ein erstes Schlagende (6A) hat;
b) ein zweites langgestrecktes Element (4B), das ein zweites Verankerungsende (10B) und ein zweites Schlagende (6B) hat; wobei das erste langgestreckte Element (4A) und das zweite langgestreckte Element (4B) parallel zu einer Längsachse (A) angeordnet sind und wobei jedes Schlagende (6A, 6B) einen distalen Schlagpunkt (20A, 20B) bietet, der innerhalb einer Schlagebene (S) angeordnet ist, die zu der Längsachse (A) senkrecht ist;
wobei die langgestreckten Elemente (4A, 4B) zwischen den Verankerungsenden und den Schlagenden an mindestens zwei Stellen gekoppelt sind, die einen oberen Koppelungspunkt (12A) und einen unteren Koppelungspunkt (12D) beinhalten, und **dadurch gekennzeichnet, dass** jedes langgestreckte Element (4A, 4B) eine Zinke (34A, 34B, 34C, 34D) hat, die sich von dem unteren Koppelungspunkt aus erstreckt, wobei jede Zinke von der Längsachse weg angewinkelt ist,
wodurch die Verankerungsenden (10A, 10B) durch eine Kraft, die auf die Schlagenden (6A, 6B) aufbringbar ist, in ein Trägermaterial eintreibbar sind.

2. Vorrichtung gemäß Anspruch 1, wobei die langgestreckten Elemente (4A, 4B) ein Metall umfassen.

3. Vorrichtung gemäß Anspruch 1 oder Anspruch 2, wobei die langgestreckten Elemente (4A, 4B) durch eine Verschweißung gekoppelt sind.

4. Vorrichtung gemäß einem der vorhergehenden Ansprüche, wobei die langgestreckten Elemente (4A, 4B) an mindestens einer zusätzlichen Stelle (12B, 12C) zwischen den Verankerungsenden und den Schlagenden gekoppelt sind.

5. Vorrichtung gemäß einem der vorhergehenden Ansprüche, wobei die langgestreckten Elemente (4A, 4B) massiv sind.

6. Vorrichtung gemäß einem der vorhergehenden Ansprüche, wobei die Schlagenden (6A, 6B) der langgestreckten Elemente mit einem umschließenden Kragen (26) gekoppelt sind.

7. Vorrichtung gemäß Anspruch 6, wobei jedes Schlagende (6A, 6B) einen distalen Schlagpunkt bietet, der mit einer Schlagseite des Kragens (26) entlang einer Schlagebene koplanar ist, die senkrecht zu der Längsachse angeordnet ist.

8. Vorrichtung gemäß Anspruch 6, ferner umfassend einen Koppelungspunkt, der in der Nähe des Kragens (26) angeordnet ist.

9. Vorrichtung gemäß Anspruch 6, wobei die langgestreckten Elemente (4A, 4B) mit dem Kragen (26) verschweißt sind.

10. Vorrichtung gemäß Anspruch 9, wobei der Kragen (26) Metall umfasst und mit mindestens einem langgestreckten Element verschweißt ist.

11. Vorrichtung gemäß einem der vorhergehenden Ansprüche, ferner umfassend ein drittes langgestrecktes Element (4C), das ein drittes Schlagende (6C) und ein drittes Verankerungsende (10C) hat.

12. Vorrichtung gemäß Anspruch 11, wobei das dritte langgestreckte Element (4C) Metall umfasst.

13. Vorrichtung gemäß einem der vorhergehenden Ansprüche, wobei mindestens ein langgestrecktes Element (4A, 4B, 4C) ein hohles Rohr, vorzugsweise ein Bewehrungsstab ist.

14. Vorrichtung gemäß einem der vorhergehenden Ansprüche, wobei der untere Koppelungspunkt (12D) eine Schweißung ist.

15. Vorrichtung gemäß einem der vorhergehenden Ansprüche, wobei das erste und das zweite langgestreckte Element (4A, 4B) zwei gleich lange Stücke Bewehrungsstab sind, die an dem oberen Koppelungspunkt (12A) und dem unteren Koppelungspunkt (12D) verschweißt sind.

## Revendications

1. Dispositif (2) comprenant :
a. un premier élément allongé (4A), ayant une première extrémité d'ancrage (10A) et une première extrémité de frappe (6A) ;
b. un second élément allongé (4B), ayant une seconde extrémité d'ancrage (10B) et une seconde extrémité de frappe (6B) ;
dans lequel le premier élément allongé (4A) et le second élément allongé (4B) sont positionnés en parallèle avec un axe allongé (A) et dans lequel chaque extrémité de frappe (6A, 6B) présente un point distal de frappe (20A, 20B) situé dans un plan de frappe (S) qui est perpendiculaire à l'axe allongé (A),
dans lequel les éléments allongés (4A, 4B) sont couplés à au moins deux emplacements, comprenant un point de couplage supérieur (12A) et un point de couplage inférieur (12D), entre les extrémités d'ancrage et les extrémités de frappe, et **caractérisé en ce que** chaque élément allongé (4A, 4B) a une dent (34A, 34B, 34C, 34D) s'étendant à partir du point de couplage inférieur, dans lequel chaque dent se coude à distance de l'axe allongé,
moyennant quoi les extrémités d'ancrage (10A, 10B) peuvent être entraînées dans un matériau de support par une force délivrée aux extrémités de frappe (6A, 6B).

2. Dispositif selon la revendication 1, dans lequel les éléments allongés (4A, 4B) comprennent un métal.

3. Dispositif selon la revendication 1 ou la revendication 2, dans lequel les éléments allongés (4A, 4B) sont couplés par une soudure.

4. Dispositif selon l'une quelconque des revendications précédentes, dans lequel les éléments allongés (4A, 4B) sont couplés à au moins un emplacement supplémentaire (12B, 12C) entre les extrémités d'ancrage et les extrémités de frappe.

5. Dispositif selon l'une quelconque des revendications précédentes, dans lequel les éléments allongés (4A, 4B) sont pleins.

6. Dispositif selon l'une quelconque des revendications précédentes, dans lequel les extrémités de frappe (6A, 6B) des éléments allongés sont couplées à un collier enveloppant (26.)

7. Dispositif selon la revendication 6, dans lequel chaque extrémité de frappe (6A, 6B) présente un point distal de frappe qui est coplanaire avec un côté de frappe du collier (26) le long d'un plan de frappe qui est positionné perpendiculairement à l'axe allongé.

8. Dispositif selon la revendication 6, comprenant en outre un point de couplage positionné à proximité du collier (26).

9. Dispositif selon la revendication 6, dans lequel les éléments allongés (4A, 4B) sont soudés avec le collier (26).

10. Dispositif selon la revendication 9, dans lequel le collier (26) comprend du métal et est soudé à au moins un élément allongé.

11. Dispositif selon l'une quelconque des revendications précédentes, comprenant en outre un troisième élément allongé (4C) ayant une troisième extrémité de frappe (6C) et une troisième extrémité d'ancrage (10C).

12. Dispositif selon la revendication 11, dans lequel le troisième élément allongé (4C) comprend du métal.

13. Dispositif selon l'une quelconque des revendications précédentes, dans lequel au moins un élément allongé (4A, 4B, 4C) est un tube creux, de préférence une barre d'armature.

14. Dispositif selon l'une quelconque des revendications précédentes, dans lequel le point de couplage inférieur (12D) est une soudure.

15. Dispositif selon l'une quelconque des revendications précédentes, dans lequel les premier et deuxième éléments allongés (4A, 4B) comprennent deux longueurs identiques de barre d'armature soudées au niveau dudit point de couplage supérieur (12A) et au niveau dudit point de couplage inférieur (12D).
